# EUROPÄISCHE PATENTSCHRIFT

(11) **EP 4 000 226 B1**
(45) Veröffentlichungstag und Bekanntmachung des Hinweises auf die Patenterteilung: **14.12.2022**
(21) Anmeldenummer: 20768011.7
(22) Anmeldetag: 04.09.2020
(51) Int. Cl.: H04L 12/40

(54) **VERFAHREN ZUR ZEITSYNCHRONISATION IN EINEM ETHERNET-BASIERTEN NETZWERK**
METHOD FOR TIME SYNCHRONIZATION IN AN ETHERNET-BASED NETWORK
PROCÉDÉ DE SYNCHRONISATION TEMPORELLE DANS UN RÉSEAU BASÉ SUR ÉTHERNET

(30) Priorität: 23.09.2019 DE 102019125527
(43) Veröffentlichungstag der Anmeldung: 25.05.2022
(73) Patentinhaber: Beckhoff Automation GmbH, 33415 Verl (DE)
(72) Erfinder: BÜTTNER, Holger, 12205 Berlin (DE); JANSSEN, Dirk, 33415 Verl (DE); VONNAHME, Erik, 33154 Salzkotten (DE); BECKHOFF, Hans, 33415 Verl (DE); RETTIG, Thomas, 33378 Rheda-Wiedenbrück (DE); BUNTE, Thorsten, 33335 Gütersloh (DE); BECKHOFF, Johannes, 33758 Schloß Holte-Stukenbrock (DE); BECKMANN, Guido, 33415 Verl (DE); WEBER, Karl, 90518 Altdorf (DE)
(74) Vertreter: Patentanwaltskanzlei WILHELM & BECK
(86) Internationale Anmeldenummer: PCT/EP2020/074699
(87) Internationale Veröffentlichungsnummer: WO 2021/058256

(56) Entgegenhaltungen:
- DE-A1-102017 210 895
- DE-A1-102017 210 895

## Beschreibung

Die vorliegende Erfindung betrifft ein Verfahren zur Zeitsynchronisation in einem Ethernet-basierten Netzwerk.

Datennetzwerke sind aus dem Stand der Technik bekannt. Kabelgebundene Datennetzwerke nach dem Stand der Technik basieren häufig auf dem Ethernet-Standard. Unter dem Oberbegriff "Industrial Ethernet" ist es im Stand der Technik bekannt, Ethernet-Datennetzwerke zur Vernetzung von Geräten in der industriellen Fertigung und der Automatisierungstechnik zu nutzen. Solche Datennetzwerke können beispielsweise auf dem EtherCAT-Standard basieren. Solche Datennetzwerke können auch als Feldbus bezeichnet werden.

Für bestimmte Steuerungsaufgaben ist es notwendig, dass alle an dieser Steuerungsaufgabe beteiligten und über einen Feldbus vernetzten Geräte dieselbe Uhrzeit benutzen. Dabei kann beispielsweise gefordert sein, dass die Uhrzeiten der einzelnen Geräte um maximal eine 1 µs voneinander abweichen sollen. Um dies zu gewährleisten, ist es bekannt, bei Feldbussen eine zyklische Zeitsynchronisation durchzuführen.

Die DE 10 2017 125 086 A1 beschreibt ein Kommunikationsnetzwerk mit einem Master-Teilnehmer und zumindest einem Slave-Teilnehmer. Ein Datenaustausch zwischen dem Master-Teilnehmer und dem Slave-Teilnehmer erfolgt in Form von Telegrammen. Von dem Slave-Teilnehmer an den Master-Teilnehmer zu versendenden Telegrammen sind jeweils Steuerdaten zugeordnet, die eine Weiterleitungszeitinformation enthalten, wann das entsprechende Telegramm in Richtung zu einem ersten Netzwerksegment mit dem Master-Teilnehmer ausgegeben werden soll, wobei die Weiterleitungszeitinformation vom Master-Teilnehmer festgelegt wird.

Die US 2018/0013508 A1 beschreibt ein Verfahren zum Betreiben eines Zeitgebers in einem Netzwerk. Das Verfahren umfasst Schritte zum Aussenden eines Zeitsignals durch den Zeitgeber, zum Empfangen eines Zeitsignals durch den Zeitgeber und zum Gewinnen von Phasen- und Frequenzinformationen aus den Zeitsignalen.

Die DE 10 2017 210 895 A1 beschreibt ein Verfahren zum Validieren einer Zeitfunktion in einem Netzwerk eines Fahrzeugs. Das Verfahren umfasst ein Ermitteln einer Empfangszeit einer Sync-Nachricht eines Masters zur Synchronisation einer Zeitinformation durch einen ersten Client, wobei der Client mit dem Master über einen ersten Kommunikationskanal verbunden ist. Weiter umfasst das Verfahren ein Empfangen einer Follow-Up-Nachricht des Masters über den ersten Kommunikationskanal durch den ersten Client, wobei die Follow-Up-Nachricht eine Sendezeit der Sync-Nachricht umfasst. Das Verfahren umfasst ferner ein Ermitteln einer Empfangszeit einer weiteren Sync-Nachricht des Masters durch den ersten Client, ein Empfangen einer weiteren Follow-Up-Nachricht des Masters über den ersten Kommunikationskanal durch den ersten Client, wobei die weitere Follow-Up-Nachricht eine Sendezeit der weiteren Sync-Nachricht umfasst, und ein Bestimmen einer Zeitfunktion des ersten Client basierend auf der Empfangszeit der Sync-Nachricht, der Empfangszeit der weiteren Sync-Nachricht, der Sendezeit der Follow-Up-Nachricht.

Eine Aufgabe der vorliegenden Erfindung besteht darin, ein Verfahren zur Zeitsynchronisation in einem Ethernet-basierten Netzwerk anzugeben. Diese Aufgabe wird durch ein Verfahren mit den Merkmalen des unabhängigen Patentanspruchs gelöst. In den abhängigen Ansprüchen sind verschiedene Weiterbildungen angegeben.

Ein Verfahren zur Zeitsynchronisation in einem Ethernet-basierten Netzwerk, das einen Master-Netzwerkteilnehmer, ein erstes Segment und ein zweites Segment aufweist, wobei jedes Segment mindestens einen Netzwerkteilnehmer aufweist, wobei das zweite Segment über einen in dem ersten Segment angeordneten ersten Netzwerkverteiler mit dem ersten Segment verbunden ist, umfasst Schritte zum Aussenden eines an das zweite Segment adressierten Synchronisationstelegramms durch den Master-Netzwerkteilnehmer, wobei das Synchronisationstelegramm einen ersten Typ aufweist, zum Empfangen des Synchronisationstelegramms durch den ersten Netzwerkverteiler, zum Umwandeln des Synchronisationstelegramms in einen zweiten Typ durch den ersten Netzwerkverteiler, zum Weiterleiten des Synchronisationstelegramms an einen Netzwerkteilnehmer des zweiten Segments durch den ersten Netzwerkverteiler, zum Auslesen eines in dem Synchronisationstelegramm hinterlegten Synchronisationswerts durch den Netzwerkteilnehmer des zweiten Segments und zum Anpassen eines Gangs einer lokalen Systemzeit des Netzwerkteilnehmers des zweiten Segments unter Verwendung des Synchronisationswerts.

Vorteilhafterweise erlaubt dieses Verfahren eine Durchführung einer Zeitsynchronisation in einem Ethernet-basierten Netzwerk mit mehreren Segmenten, in dem nicht alle Telegramme stets alle Netzwerkteilnehmer aller Segmente durchlaufen. Dies wird durch dieses Verfahren dadurch ermöglicht, dass der Master-Netzwerkteilnehmer zur Zeitsynchronisation der Netzwerkteilnehmer des zweiten Segments das explizit an das zweite Segment adressierte Synchronisationstelegramm aussendet. Dadurch, dass das Synchronisationstelegramm mit dem ersten Typ ausgesendet und erst durch den ersten Netzwerkverteiler in den zweiten Typ umgewandelt wird, kann vorteilhafterweise erreicht werden, dass unbeteiligte Netzwerkteilnehmer des Ethernet-basierten Netzwerks das Synchronisationstelegramm nicht beachten.

Dadurch, dass der Netzwerkteilnehmer des zweiten Segments den ihm mit dem Synchronisationstelegramm mitgeteilten Synchronisationswert nutzt, um den Gang seiner lokalen Systemzeit anzupassen, kann vorteilhafterweise erreicht werden, dass die lokale Systemzeit des Netzwerkteilnehmers des zweiten Segments synchron mit der Systemzeit des übrigen Netzwerks bleibt. Dies gilt entsprechend auch für eventuelle weitere Netzwerkteilnehmer des zweiten Segments.

Das Verfahren kann entsprechend auch für weitere Segmente des Netzwerks durchgeführt werden, die über in dem ersten Segment angeordnete Netzwerkverteiler mit dem ersten Segment verbunden sind.

In einer Ausführungsform des Verfahrens weist das Netzwerk ein drittes Segment auf, das über einen in dem zweiten Segment angeordneten zweiten Netzwerkverteiler mit dem zweiten Segment verbunden ist. Dabei umfasst das Verfahren weitere Schritte zum Aussenden eines an das dritte Segment adressierten weiteren Synchronisationstelegramms durch den Master-Netzwerkteilnehmer, wobei das weitere Synchronisationstelegramm den ersten Typ aufweist, zum Empfangen des weiteren Synchronisationstelegramms durch den zweiten Netzwerkverteiler, zum Umwandeln des weiteren Synchronisationstelegramms in den zweiten Typ durch den zweiten Netzwerkverteiler, zum Weiterleiten des weiteren Synchronisationstelegramms an einen Netzwerkteilnehmer des dritten Segments durch den zweiten Netzwerkverteiler, zum Auslesen eines in dem weiteren Synchronisationstelegramm hinterlegten weiteren Synchronisationswerts durch den Netzwerkteilnehmer des dritten Segments und zum Anpassen eines Gangs einer lokalen Systemzeit des Netzwerkteilnehmers des dritten Segments unter Verwendung des weiteren Synchronisationswerts.

Vorteilhafterweise ermöglicht dieses Verfahren eine Zeitsynchronisation auch der in dem dritten Segment angeordneten Netzwerkteilnehmer des Netzwerks und entsprechend auch eine Zeitsynchronisation von Netzwerkteilnehmern, die in anderen dem zweiten oder anderen Segmenten nachgeordneten Segmenten des Netzwerks angeordnet sind. Das Verfahren ermöglicht dies dadurch, dass der Master-Netzwerkteilnehmer das ausdrücklich an das dritte Segment adressierte weitere Synchronisationstelegramm aussendet. Der Netzwerkteilnehmer des dritten Segments nutzt den mit diesem weiteren Synchronisationstelegramm mitgeteilten weiteren Synchronisationswert, um den Gang seiner lokalen Systemzeit anzupassen. Eventuelle weitere Netzwerkteilnehmer des dritten Segments verfahren analog. Dadurch wird erreicht, dass die lokale Systemzeit des Netzwerkteilnehmers des dritten Segments und eventueller weiterer Netzwerkteilnehmer des dritten Segments synchron zu der Systemzeit des übrigen Netzwerks bleibt.

Dadurch, dass der Master-Netzwerkteilnehmer das weitere Synchronisationstelegramm mit dem ersten Typ aussendet und erst der zweite Netzwerkverteiler das weitere Synchronisationstelegramm in den zweiten Typ umwandelt, kann erreicht werden, dass Netzwerkteilnehmer des Netzwerks, an die das weitere Synchronisationstelegramm nicht gerichtet ist, das weitere Synchronisationstelegramm nicht beachten. Durch die Umwandlung des weiteren Synchronisationstelegramms in den zweiten Typ durch den zweiten Netzwerkverteiler wird dabei sichergestellt, dass die Netzwerkteilnehmer des dritten Segments das weitere Synchronisationstelegramm beachten.

In einer Ausführungsform des Verfahrens wird nach dem Empfangen des Synchronisationstelegramms durch den ersten Netzwerkverteiler ein weiterer Schritt durchgeführt zum Einfügen einer Zeitinformation des ersten Netzwerkverteilers als Synchronisationswert in das Synchronisationstelegramm durch den ersten Netzwerkverteiler. In dieser Variante des Verfahrens wird also die Zeitinformation des ersten Netzwerkverteilers als Synchronisationswert zur Zeitsynchronisation der Netzwerkteilnehmer des zweiten Segments des Netzwerks genutzt. Entsprechend wird zur Zeitsynchronisation von Netzwerkteilnehmern des Netzwerks, die in anderen mit dem ersten Segment verbundenen Segmenten des Netzwerks angeordnet sind, jeweils eine Zeitinformation des Netzwerkverteilers genutzt, über den das jeweilige Segment mit dem ersten Segment verbunden ist.

In einer Ausführungsform des Verfahrens wird die Zeitinformation des ersten Netzwerkverteilers aus einer lokalen Zeit des ersten Netzwerkverteilers und einer in dem ersten Netzwerkverteiler hinterlegten Zeitdifferenz gebildet. Die in dem ersten Netzwerkverteiler hinterlegte Zeitdifferenz kann dabei angeben, um welchen Wert sich die lokale Zeit des ersten Netzwerkverteilers von einer Referenzzeit des ersten Segments des Netzwerks unterscheidet. Ein Gang der lokalen Zeit des ersten Netzwerkverteilers kann seinerseits einer zyklischen Zeitsynchronisation unterworfen sein.

In einer anderen Ausführungsform des Verfahrens wird die Zeitinformation des ersten Netzwerkverteilers aus einem während eines vorhergehenden Synchronisationsvorgangs erhaltenen Wert der Systemzeit des ersten Segments und einem Zeitfortschritt einer lokalen Zeit des ersten Netzwerkverteilers seit dem Erhalt des Werts der Systemzeit des ersten Segments gebildet. Vorteilhafterweise kann die Zeitinformation des ersten Netzwerkverteilers bei dieser Variante eine noch höhere Übereinstimmung mit der Systemzeit des ersten Segments aufweisen.

In einer Ausführungsform des Verfahrens umfasst dieses einen weiteren Schritt zum Einfügen einer Zeitinformation des zweiten Netzwerkverteilers als weiteren Synchronisationswert in das weitere Synchronisationstelegramm durch den zweiten Netzwerkverteiler. Dadurch wird vorteilhafterweise erreicht, dass die in dem dritten Segment des Netzwerks angeordneten Netzwerkteilnehmer die Zeitinformation des zweiten Netzwerkverteilers zur Zeitsynchronisation nutzen. Die Zeitinformation des zweiten Netzwerkverteilers kann dabei analog zu der Zeitinformation des ersten Netzwerkverteilers gebildet werden.

In einer alternativen Ausführungsform des Verfahrens wird vor dem Empfangen des Synchronisationstelegramms durch den ersten Netzwerkverteiler ein weiterer Schritt durchgeführt zum Einfügen einer Referenzzeit als Synchronisationswert in das Synchronisationstelegramm durch einen Referenzzeitgeber. Nach dem Empfangen des Synchronisationstelegramms durch den ersten Netzwerkverteiler wird ein weiterer Schritt durchgeführt zum Erhöhen des in dem Synchronisationstelegramm hinterlegten Synchronisationswerts um eine für das Weiterleiten des Synchronisationstelegramms durch den ersten Netzwerkverteiler erforderliche erste Durchlaufzeit durch den ersten Netzwerkverteiler. In dieser Ausführungsform des Verfahrens wird für die Zeitsynchronisation des Netzwerkteilnehmers des zweiten Segments die durch den Referenzzeitgeber als Synchronisationswert in das Synchronisationstelegramm eingefügte Referenzzeit genutzt. Dabei wird vorteilhafterweise sichergestellt, dass eine für das Weiterleiten des Synchronisationstelegramms durch den ersten Netzwerkverteiler erforderliche erste Durchlaufzeit bei der Zeitsynchronisation des Netzwerkteilnehmers des zweiten Segments berücksichtigt wird. Dies wird erreicht, indem der erste Netzwerkverteiler die erste Durchlaufzeit zu dem in dem Synchronisationstelegramm hinterlegten Synchronisationswert addiert.

In einer Ausführungsform des Verfahrens fungiert als Referenzzeitgeber ein Netzwerkteilnehmer des ersten Segments. Dabei umfasst das Einfügen der Referenzzeit in das Synchronisationstelegramm Schritte zum Empfangen des Synchronisationstelegramms durch den Referenzzeitgeber, zum Einfügen einer lokalen Systemzeit des Referenzzeitgebers als die Referenzzeit in das Synchronisationstelegramm durch den Referenzzeitgeber und zum Weiterleiten des Synchronisationstelegramms durch den Referenzzeitgeber. In dieser Ausführungsform des Verfahrens kann beispielsweise der erste Netzwerkteilnehmer des ersten Segments als Referenzzeitgeber fungieren. Vorteilhafterweise erfordert das Verfahren dadurch nur geringe Änderungen gegenüber einem Zeitsynchronisationsverfahren gemäß dem Stand der Technik.

In einer anderen Ausführungsform des Verfahrens fungiert der Master-Netzwerkteilnehmer als Referenzzeitgeber. Dabei fügt der Master-Netzwerkteilnehmer die Referenzzeit vor dem Aussenden des Synchronisationstelegramms in das Synchronisationstelegramm ein. Vorteilhafterweise war auch diese Variante bereits bei einem Zeitsynchronisation gemäß dem Stand der Technik möglich.

In einer Ausführungsform des Verfahrens werden vor dem Empfangen des weiteren Synchronisationstelegramms durch den zweiten Netzwerkverteiler weitere Schritte durchgeführt zum Einfügen einer Referenzzeit als weiteren Synchronisationswert in das weitere Synchronisationstelegramm durch den Referenzzeitgeber, zum Empfangen des weiteren Synchronisationstelegramms durch den ersten Netzwerkverteiler und zum Weiterleiten des weiteren Synchronisationstelegramms durch den ersten Netzwerkverteiler. Dabei wird nach dem Empfangen des weiteren Synchronisationstelegramms durch den zweiten Netzwerkverteiler ein weiterer Schritt durchgeführt zum Erhöhen des in dem weiteren Synchronisationstelegramm hinterlegten weiteren Synchronisationswerts um eine für das Weiterleiten des weiteren Synchronisationstelegramms durch den zweiten Netzwerkverteiler erforderliche zweite Durchlaufzeit durch den zweiten Netzwerkverteiler. Vorteilhafterweise wird durch diese Verfahrensschritte sichergestellt, dass bei der Zeitsynchronisation des Netzwerkteilnehmers des dritten Segments mittels des in dem weiteren Synchronisationstelegramm enthaltenen weiteren Synchronisationswerts die für das Weiterleiten des weiteren Synchronisationstelegramms durch den ersten Netzwerkverteiler und den zweiten Netzwerkverteiler benötigte erste Durchlaufzeit und zweite Durchlaufzeit berücksichtigt werden.

In einer Ausführungsform des Verfahrens weist das Synchronisationstelegramm ein Typfeld auf. Dabei umfasst das Umwandeln des Synchronisationstelegramms von dem ersten Typ in den zweiten Typ ein Ersetzen eines ersten Werts des Typfelds durch einen zweiten Wert. Vorteilhafterweise stellt dies eine einfache Möglichkeit dar, den Typ des Synchronisationstelegramms festzulegen und zu verändern. Der Typ des weiteren Synchronisationstelegramms kann entsprechend durch ein Typfeld des weiteren Synchronisationstelegramms festgelegt sein.

In einer Ausführungsform des Verfahrens ist das Netzwerk ein EtherCAT-Netzwerk. In diesem Fall können das Synchronisationstelegramm und das weitere Synchronisationstelegramm als EtherCAT-Telegramme ausgebildet sein.

Die Erfindung wird im Folgenden anhand von Figuren näher erläutert. Dabei zeigen:
- Figur 1: eine schematische Darstellung eines Netzwerks mit mehreren Segmenten mit jeweils mehreren Netzwerkteilnehmern;
- Figur 2: eine schematische Darstellung eines Netzwerkteilnehmers des Netzwerks;
- Figur 3: eine schematische Darstellung von sechs Synchronisationstelegrammen;
- Figur 4: eine schematische Darstellung eines Teils des Netzwerks gemäß einer ersten Variante;
- Figur 5: eine schematische Darstellung eines Teils des Netzwerks gemäß einer zweiten Variante; und
- Figur 6: einen Zeitstrahl zur Illustration von zur Durchleitung eines Synchronisationstelegramms erforderlichen Durchlaufzeiten.

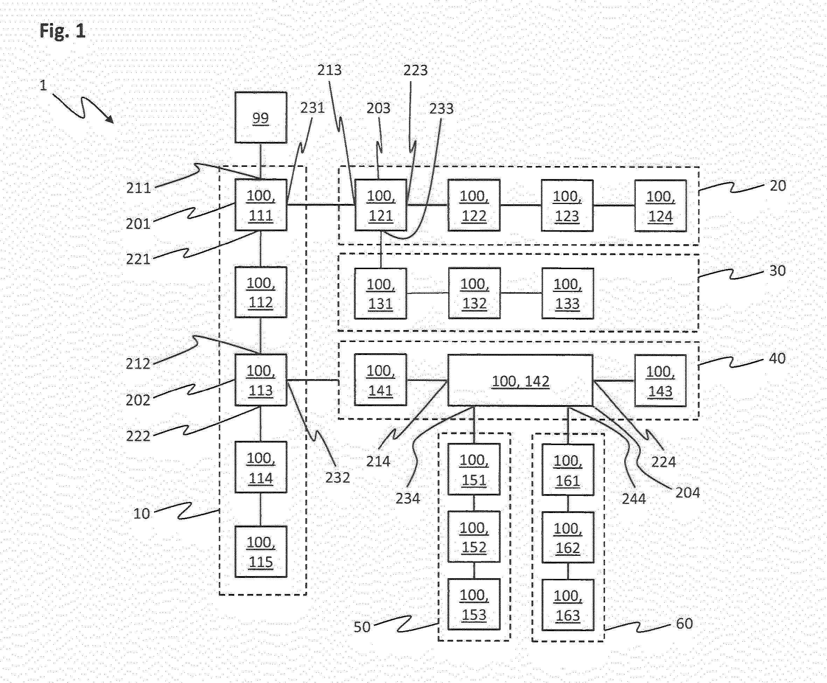

Figur 1 zeigt eine schematische Darstellung eines beispielhaften Netzwerks 1. Das Netzwerk 1 ist ein Ethernet-basiertes Netzwerk und kann beispielsweise für Steuerungs- und Automatisierungszwecke dienen. Das Netzwerk 1 kann auch als Feldbus bezeichnet werden. Das Netzwerk 1 kann beispielsweise ein EtherCAT-Netzwerk sein.

Das Netzwerk 1 ist in mehrere Segmente unterteilt. Im dargestellten Beispiel weist das Netzwerk 1 ein erstes Segment 10, ein zweites Segment 20, ein drittes Segment 30, ein viertes Segment 40, ein fünftes Segment 50 und ein sechstes Segment 60 auf. Jedes dieser Segmente 10, 20, 30, 40, 50, 60 weist einen oder mehrere Netzwerkteilnehmer 100 auf. Die Netzwerkteilnehmer 100 können auch als Slave-Netzwerkteilnehmer bezeichnet werden.

Die Netzwerkteilnehmer 100 der unterschiedlichen Segmente 10, 20, 30, 40, 50, 60 können mit unterschiedlichen Übertragungsraten miteinander kommunizieren. Beispielsweise können die Netzwerkteilnehmer 100 des zweiten Segments 20 mit einer Übertragungsrate von 1 GBaud und die Netzwerkteilnehmer 100 des dritten Segments 30 mit einer Übertragungsrate von 100 MBaud miteinander kommunizieren. Auch andere Übertragungsraten sind möglich. Selbstverständlich können auch alle Netzwerkteilnehmer 100 aller Segmente 10, 20, 30, 40, 50, 60 mit derselben Übertragungsrate miteinander kommunizieren.

Im in Figur 1 gezeigten Beispiel weist das erste Segment 10 einen ersten Netzwerkteilnehmer 100, 111, einen zweiten Netzwerkteilnehmer 100, 112, einen dritten Netzwerkteilnehmer 100, 113, einen vierten Netzwerkteilnehmer 100, 114 und einen fünften Netzwerkteilnehmer 100, 115 auf. Das zweite Segment 20 weist einen ersten Netzwerkteilnehmer 100, 121, einen zweiten Netzwerkteilnehmer 100, 122, einen dritten Netzwerkteilnehmer 100, 123 und einen vierten Netzwerkteilnehmer 100, 124 auf. Das dritte Segment 30 weist einen ersten Netzwerkteilnehmer 100, 131, einen zweiten Netzwerkteilnehmer 100, 132 und einen dritten Netzwerkteilnehmer 100, 133 auf. Das vierte Segment 40 weist einen ersten Netzwerkteilnehmer 100, 141, einen zweiten Netzwerkteilnehmer 100, 142 und einen dritten Netzwerkteilnehmer 100, 143 auf. Das fünfte Segment 50 weist einen ersten Netzwerkteilnehmer 100, 151, einen zweiten Netzwerkteilnehmer 100, 152 und einen dritten Netzwerkteilnehmer 100, 153 auf. Das sechste Segment 60 weist einen ersten Netzwerkteilnehmer 100, 161, einen zweiten Netzwerkteilnehmer 100, 162 und einen dritten Netzwerkteilnehmer 100, 163 auf.

Der erste Netzwerkteilnehmer 100, 111 des ersten Segments 10 ist als erster Netzwerkverteiler 201 ausgebildet und verbindet das zweite Segment 20 mit dem ersten Segment 10 des Netzwerks 1. Hierzu weist der erste Netzwerkverteiler 201 einen ersten Anschluss 211, einen zweiten Anschluss 221 und einen dritten Anschluss 231 auf. Die Anschlüsse 211, 221, 231 des ersten Netzwerkverteilers 201 können auch als Ports bezeichnet werden und sind jeweils als kombinierte Dateneingänge und Datenausgänge ausgebildet. Der zweite Anschluss 221 verbindet den als ersten Netzwerkverteiler 201 ausgebildeten ersten Netzwerkteilnehmer 100, 111 des ersten Segments 10 mit dem zweiten Netzwerkteilnehmer 100, 112 des ersten Segments 10. Der dritte Anschluss 231 verbindet den ersten Netzwerkverteiler 201 mit dem ersten Netzwerkteilnehmer 100, 121 des zweiten Segments 20.

Der dritte Netzwerkteilnehmer 100, 113 des ersten Segments 10 ist als zweiter Netzwerkverteiler 202 ausgebildet. Der zweite Netzwerkverteiler 202 weist einen ersten Anschluss 212, einen zweiten Anschluss 222 und einen dritten Anschluss 232 auf. Die Anschlüsse 212, 222, 232 des zweiten Netzwerkverteilers 202 sind analog zu den Anschlüssen 211, 221, 231 des ersten Netzwerkverteilers 201 ausgebildet. Der erste Anschluss 212 des zweiten Netzwerkverteilers 202 verbindet den zweiten Netzwerkverteiler 202 mit dem zweiten Netzwerkteilnehmer 100, 112 des ersten Segments 10. Der zweite Anschluss 222 des zweiten Netzwerkverteilers 202 verbindet den zweiten Netzwerkverteiler 202 mit dem vierten Netzwerkteilnehmer 100, 114 des ersten Segments 10. Der dritte Anschluss 232 verbindet den zweiten Netzwerkverteiler 202 mit dem ersten Netzwerkteilnehmer 100, 141 des vierten Segments 40. Dadurch verbindet der zweite Netzwerkverteiler 202 das vierte Segment 40 des Netzwerks 1 mit dem ersten Segment 10.

Der erste Netzwerkteilnehmer 100, 121 des zweiten Segments 20 ist als dritter Netzwerkverteiler 203 ausgebildet. Der dritte Netzwerkverteiler 203 weist einen ersten Anschluss 213, einen zweiten Anschluss 223 und einen dritten Anschluss 233 auf. Die Anschlüsse 213, 223, 233 des dritten Netzwerkverteilers 203 sind analog zu den Anschlüssen 211, 221, 231 des ersten Netzwerkverteilers 201 ausgebildet. Der erste Anschluss 213 des dritten Netzwerkverteilers 203 ist mit dem dritten Anschluss 231 des ersten Netzwerkverteilers 201 verbunden, wodurch die Verbindung zwischen dem zweiten Segment 20 und dem ersten Segment 10 hergestellt ist. Der zweite Anschluss 223 des dritten Netzwerkverteilers 203 ist mit dem zweiten Netzwerkteilnehmer 100, 122 des zweiten Segments 20 verbunden. Der dritte Anschluss 233 des dritten Netzwerkverteilers 203 ist mit dem ersten Netzwerkteilnehmer 100, 131 des dritten Segments 30 verbunden. Dadurch verbindet der dritte Netzwerkverteiler 203 das dritte Segment 30 des Netzwerks 1 mit dem zweiten Segment 20.

Der zweite Netzwerkteilnehmer 100, 142 des viertes Segments 40 ist als vierter Netzwerkverteiler 204 ausgebildet. Der vierte Netzwerkverteiler 204 weist einen ersten Anschluss 214, einen zweiten Anschluss 224, einen dritten Anschluss 234 und einen vierten Anschluss 244 auf. Die Anschlüsse 214, 224, 234, 244 des vierten Netzwerkverteilers 204 sind analog zu den Anschlüssen 211, 221, 231 des ersten Netzwerkverteilers 201 ausgebildet. Der erste Anschluss 214 des vierten Netzwerkverteilers 204 ist mit dem ersten Netzwerkteilnehmer 100, 141 des vierten Segments 40 verbunden. Der zweite Anschluss 224 des vierten Netzwerkverteilers 204 ist mit dem dritten Netzwerkteilnehmer 100, 143 des vierten Segments 40 verbunden. Der dritte Anschluss 234 des vierten Netzwerkverteilers 204 ist mit dem ersten Netzwerkteilnehmer 100, 151 des fünften Segments 50 verbunden. Dadurch verbindet der vierte Netzwerkverteiler 204 das fünfte Segment 50 des Netzwerks 1 mit dem vierten Segment 40. Der vierte Anschluss 244 des vierten Netzwerkverteilers 204 ist mit dem ersten Netzwerkteilnehmer 100, 161 des sechsten Segments 60 verbunden. Dadurch verbindet der vierte Netzwerkverteiler 204 auch das sechste Segment 60 mit dem vierten Segment 40 des Netzwerks 1.

Damit weist das in Figur 1 beispielhaft dargestellte Netzwerk 1 eine Struktur auf, in der das zweite Segment 20 und das vierte Segment 40 an das erste Segment 10 angekoppelt und dem ersten Segment 10 damit nachgelagert sind. Das dritte Segment 30 ist an das zweite Segment 20 angekoppelt und damit dem zweiten Segment 20 nachgelagert. Das fünfte Segment 50 und das sechste Segment 60 sind an das vierte Segment 40 angekoppelt und damit dem vierten Segment 40 nachgelagert.

Zusätzlich zu den in den Segmenten 10, 20, 30, 40, 50, 60 angeordneten Netzwerkteilnehmern 100 weist das Netzwerk 1 einen Master-Netzwerkteilnehmer 99 auf. Der Master-Netzwerkteilnehmer 99 ist mit dem ersten Anschluss 211 des als erster Netzwerkverteiler 201 ausgebildeten ersten Netzwerkteilnehmers 100, 111 des ersten Segments 10 verbunden. Der Master-Netzwerkteilnehmer 99 nimmt in dem Netzwerk 1 eine Leitungsfunktion wahr. Hierzu kann der Master-Netzwerkteilnehmer 99 beispielsweise Datentelegramme an die Netzwerkteilnehmer 100 des Netzwerks 1 aussenden.

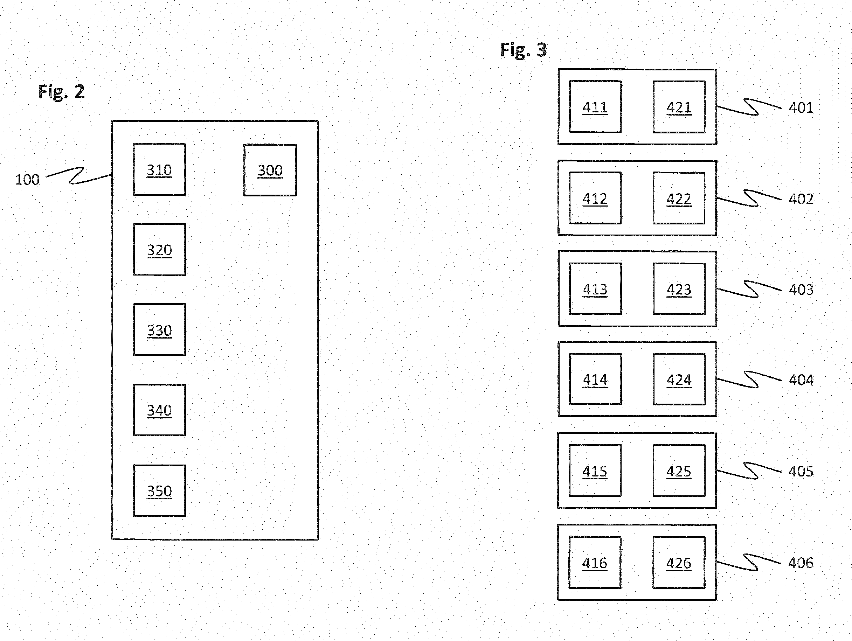

Figur 2 zeigt eine schematische Darstellung eines der Netzwerkteilnehmer 100 des Netzwerks 1. Alle Netzwerkteilnehmer 100 des Netzwerks 1 weisen mindestens die in Figur 2 dargestellten Komponenten auf.

Der Netzwerkteilnehmer 100 weist einen internen Zeitgeber 300 auf. Der interne Zeitgeber 300 kann beispielsweise einen Schwingquarz umfassen. Mittels des internen Zeitgebers 300 wird eine lokale Zeit 310 des Netzwerkteilnehmers 100 hochgezählt. Die lokale Zeit 310 kann beispielsweise die Zeit angeben, die seit dem Einschalten des Netzwerkteilnehmers 100 vergangen ist. Beispielsweise kann die lokale Zeit 310 diese Zeitspanne in Nanosekunden angeben. Die Geschwindigkeit, mit der die lokale Zeit 310 auf Grundlage des internen Zeitgebers 300 erhöht wird, kann angepasst werden, um ein zu schnelles oder zu langsames Fortschreiten der lokalen Zeit 310 zu korrigieren.

Die jeweilige lokale Zeit 310 der Netzwerkteilnehmer 100 unterscheidet sich üblicherweise bei den einzelnen Netzwerkteilnehmern 100 des Netzwerks 1. Im Betrieb des Netzwerks 1 ist es allerdings wünschenswert, dass alle Netzwerkteilnehmer 100 des Netzwerks 1 eine gemeinsame Zeitbasis nutzen können, um die einzelnen Netzwerkteilnehmer 100 miteinander zu synchronisieren und Handlungen und Ereignisse eindeutigen Zeitpunkten zuordnen zu können. Zu diesem Zweck wird in dem Netzwerk 1 eine Systemzeit vorgegeben. Die Systemzeit kann auch als Referenzzeit oder als Master-Zeit bezeichnet werden. Die Systemzeit kann beispielsweise die seit dem 1. Januar 2000, 00:00 Uhr vergangene Zeit in Nanosekunden angeben. In jedem Netzwerkteilnehmer 100 ist eine Zeitdifferenz 320 hinterlegt, die eine Differenz zwischen der jeweiligen lokalen Zeit 310 des Netzwerkteilnehmers 100 und der Systemzeit angibt. Diese Zeitdifferenz 320 wird während einer Initialisierungsphase des Netzwerks 1 für jeden Netzwerkteilnehmer 100 des Netzwerks 1 durch den Master-Netzwerkteilnehmer 99 bestimmt und in dem jeweiligen Netzwerkteilnehmer 100 hinterlegt. Die in dem Netzwerkteilnehmer 100 hinterlegte Zeitdifferenz 320 ermöglicht es jedem Netzwerkteilnehmer 100, durch Addition der lokalen Zeit 310 und der Zeitdifferenz 320 eine lokale Kopie der Systemzeit des Netzwerks 1 als lokale Systemzeit 340 zu berechnen.

Da jeder Netzwerkteilnehmer 100 des Netzwerks 1 über einen eigenen internen Zeitgeber 300 verfügt und sich diese internen Zeitgeber 300 voneinander unterscheiden, kann die lokale Zeit 310 bei jedem Netzwerkteilnehmer 100 des Netzwerks 1 mit leicht unterschiedlicher Geschwindigkeit erhöht werden. Dadurch unterscheidet sich die Geschwindigkeit des Fortschreitens der lokalen Zeit 310 und damit auch die Geschwindigkeit des Fortschreitens der lokalen Systemzeit 340 auch von der Geschwindigkeit des Fortschreitens der Systemzeit des Netzwerks 1. Hieraus ergibt sich eine schleichende Abweichung oder Drift, die durch eine zyklische Synchronisation der einzelnen Netzwerkteilnehmer 100 des Netzwerks 1 kompensiert werden muss. Bei dieser zyklischen Synchronisation der Netzwerkteilnehmer 100 wird in jedem Netzwerkteilnehmer 100 der Gang der lokalen Systemzeit 340, also die Geschwindigkeit des Fortschreitens der lokalen Systemzeit 340, angepasst.

Zur Zeitsynchronisation der Netzwerkteilnehmer 100 des Netzwerks 1 werden durch den Master-Netzwerkteilnehmer 99 des Netzwerks 1 segmentweise Synchronisationstelegramme ausgesandt, mit denen die Netzwerkteilnehmer 100 eines Segments 10, 20, 30, 40, 50, 60 jeweils einen aktuellen Wert der Systemzeit durch einen Referenzzeitgeber als Synchronisationswert mitgeteilt bekommen. Die Netzwerkteilnehmer 100 vergleichen diesen Synchronisationswert mit der jeweils eigenen lokalen Systemzeit 340 und passen die Geschwindigkeit des Fortschreitens der jeweiligen lokalen Systemzeit 340 (also den Gang der jeweiligen lokalen Systemzeit 340) entsprechend an. Ist der erhaltene Synchronisationswert größer als die lokale Systemzeit 340, so muss die Geschwindigkeit des Fortschreitens der lokalen Systemzeit 340 erhöht werden. Ist der Synchronisationswert kleiner als die lokale Systemzeit 340, so muss die Geschwindigkeit des Fortschreitens der lokalen Systemzeit 340 des jeweiligen Netzwerkteilnehmers 100 reduziert werden.

Beim Vergleichen der mit den Synchronisationstelegrammen erhaltenen Synchronisationswerte mit der jeweiligen lokalen Systemzeit 340 berücksichtigen die Netzwerkteilnehmer 100 des Netzwerks 1 jeweils noch eine in dem jeweiligen Netzwerkteilnehmer 100 hinterlegte Verzögerungszeit 330, die angibt, welche Zeit das Synchronisationstelegramm benötigt, um von dem Referenzzeitgeber zu dem jeweiligen Netzwerkteilnehmer 100 zu gelangen. Diese Verzögerungszeit 330 wird während einer Initialisierungsphase des Netzwerks 1 durch den Master-Netzwerkteilnehmer 99 für jeden Netzwerkteilnehmer 100 des Netzwerks 1 ermittelt und in dem jeweiligen Netzwerkteilnehmer 100 hinterlegt.

Die Zeitsynchronisation wird segmentweise durchgeführt, also beispielsweise nacheinander für das erste Segment 10, das zweite Segment 20, das dritte Segment 30, das vierte Segment 40, das fünfte Segment 50 und das sechste Segment 60 des Netzwerks 1. Dabei werden jeweils alle Netzwerkteilnehmer 100 eines Segments 10, 20, 30, 40, 50, 60 gemeinsam mittels eines Synchronisationstelegramms synchronisiert. In Figur 3 sind schematisch ein erstes Synchronisationstelegramm 401, ein zweites Synchronisationstelegramm 402, ein drittes Synchronisationstelegramm 403, ein viertes Synchronisationstelegramm 404, ein fünftes Synchronisationstelegramm 405 und ein sechstes Synchronisationstelegramm 406 dargestellt. Mittels des ersten Synchronisationstelegramms 401 werden die Netzwerkteilnehmer 100 des ersten Segments 10 synchronisiert. Mittels des zweiten Synchronisationstelegramms 402 werden die Netzwerkteilnehmer 100 des zweiten Segments 20 synchronisiert. Mittels des dritten Synchronisationstelegramms 403 werden die Netzwerkteilnehmer 100 des dritten Segments 30 synchronisiert. Mittels des vierten Synchronisationstelegramms 404 werden die Netzwerkteilnehmer 100 des vierten Segments 40 synchronisiert. Mittels des fünften Synchronisationstelegramms 405 werden die Netzwerkteilnehmer 100 des fünften Segments 50 synchronisiert. Mittels des sechsten Synchronisationstelegramms 406 werden die Netzwerkteilnehmer 100 des sechsten Segments 60 synchronisiert.

Jedes Synchronisationstelegramm 401, 402, 403, 404, 405, 406 weist ein Typfeld auf. Das erste Synchronisationstelegramm 401 weist ein erstes Typfeld 421 auf. Das zweite Synchronisationstelegramm 402 weist ein zweites Typfeld 422 auf. Das dritte Synchronisationstelegramm 403 weist ein drittes Typfeld 423 auf. Das vierte Synchronisationstelegramm 404 weist ein viertes Typfeld 424 auf. Das fünfte Synchronisationstelegramm 405 weist ein fünftes Typfeld 425 auf. Das sechste Synchronisationstelegramm 406 weist ein sechstes Typfeld 426 auf. Die Typfelder 421, 422, 423, 424, 425, 426 können jeweils unterschiedliche Werte annehmen, um einen Typ des jeweiligen Synchronisationstelegramms 401, 402, 403, 404, 405, 406 festzulegen. Weist das jeweilige Typfeld 421, 422, 423, 424, 425, 426 einen ersten Wert auf, so hat das jeweilige Synchronisationstelegramm 401, 402, 403, 404, 405, 406 einen ersten Typ. Weist das jeweilige Typfeld 421, 422, 423, 424, 425, 426 einen zweiten Wert auf, so hat das jeweilige Synchronisationstelegramm 401, 402, 403, 404, 405, 406 einen zweiten Typ. Jedes der Synchronisationstelegramme 401, 402, 403, 404, 405, 406 kann von dem ersten Typ in den zweiten Typ umgewandelt werden, indem der erste Wert des jeweiligen Typfelds 421, 422, 423, 424, 425, 426 durch den zweiten Wert ersetzt wird.

Das Typfeld 421, 422, 423, 424, 425, 426 ermöglicht es, dass nicht alle Netzwerkteilnehmer 100 des Netzwerks 1 alle Synchronisationstelegramme 401, 402, 403, 404, 405, 406 beachten. Beispielsweise können die Netzwerkteilnehmer 100 so eingerichtet sein, dass sie Synchronisationstelegramme 401, 402, 403, 404, 405, 406 unbeachtet lassen, wenn diese den ersten Typ aufweisen. Synchronisationstelegramme 401, 402, 403, 404, 405, 406, die den zweiten Typ aufweisen, werden durch die Netzwerkteilnehmer 100 dagegen beachtet. Nachfolgend werden noch Ausnahmen und Ergänzungen zu dieser Regelung beschrieben.

Nachfolgend werden zwei Varianten eines Verfahrens zur Zeitsynchronisation in dem Netzwerk 1 beschrieben. Diese Varianten des Verfahrens unterscheiden sich darin, welche Zeitinformationen jeweils als Synchronisationswerte zur Synchronisation der Netzwerkteilnehmer 100 der unterschiedlichen Segmente 10, 20, 30, 40, 50, 60 verwendet werden.

Bei der ersten Variante des Verfahrens wird zur Zeitsynchronisation der Netzwerkteilnehmer 100 eines nachgeordneten Segments 20, 30, 40, 50, 60 jeweils eine Zeitinformation desjenigen Netzwerkverteilers 201, 202, 203, 204 verwendet, an dem das jeweilige Segment 20, 30, 40, 50, 60 beginnt. Im in Figur 1 gezeigten beispielhaften Netzwerk 1 wird also zur Synchronisation der Netzwerkteilnehmer 100 des zweiten Segments 20 eine Zeitinformation des ersten Netzwerkverteilers 201 genutzt. Zur Synchronisation der Netzwerkteilnehmer 100 des dritten Segments 30 wird eine Zeitinformation des dritten Netzwerkverteilers 203 genutzt. Zur Zeitsynchronisation der Netzwerkteilnehmer 100 des vierten Segments 40 wird eine Zeitinformation des zweiten Netzwerkverteilers 202 genutzt. Zur Zeitsynchronisation der Netzwerkteilnehmer 100 des fünften Segments 50 wird eine Zeitinformation des vierten Netzwerkverteilers 204 genutzt. Zur Zeitsynchronisation der Netzwerkteilnehmer 100 des sechsten Segments 60 wird ebenfalls eine Zeitinformation des vierten Netzwerkverteilers 204 verwendet.

Die verwendete Zeitinformation des jeweiligen Netzwerkverteilers 201, 202, 203, 204 kann dabei die lokale Systemzeit 340 des jeweiligen Netzwerkverteilers 201, 202, 203, 204 sein. Diese lokale Systemzeit 340 kann der jeweilige Netzwerkverteiler 201, 202, 203, 204, wie bereits beschrieben, durch Addition seiner lokalen Zeit 310 und der in dem jeweiligen Netzwerkverteiler 201, 202, 203, 204 hinterlegten Zeitdifferenz 320 berechnen.

Alternativ kann die Zeitinformation eine alternative lokale Systemzeit 350 des jeweiligen Netzwerkverteilers 201, 202, 203, 204 sein. Diese alternative lokale Systemzeit 350 kann der jeweilige Netzwerkverteiler 201, 202, 203, 204 aus einem während eines vorangegangenen Synchronisationsvorgangs in seinem Segment 10, 20, 30, 40, 50, 60 erhaltenen Wert der Systemzeit und einem Zeitfortschritt der lokalen Zeit 310 des jeweiligen Netzwerkverteilers 201, 202, 203, 204 seit dem Erhalt dieses Werts der Systemzeit bilden. Der Zeitfortschritt der lokalen Zeit 310 seit dem Erhalt des Werts der Systemzeit kann dabei ermittelt werden, indem der jeweilige Netzwerkverteiler 201, 202, 203, 204 den Wert der lokalen Zeit 310 zum Zeitpunkt des Erhalts des Werts der Systemzeit abspeichert und zum Zeitpunkt des Ermittelns der alternativen lokalen Systemzeit 350 mit dem dann aktuellen Wert der lokalen Zeit 310 vergleicht. Alternativ kann der erhaltene Wert der Systemzeit durch den jeweiligen Netzwerkverteiler 201, 202, 203, 204 abgespeichert und ab dem Zeitpunkt des Erhalts dieses Werts der Systemzeit synchron zu der lokalen Zeit 310 hochgezählt werden.

Zur Zeitsynchronisation der Netzwerkteilnehmer 100 des ersten Segments 10 des Netzwerks 1 sendet der Master-Netzwerkteilnehmer 99 das erste Synchronisationstelegramm 401 aus und adressiert dieses an das erste Segment 10. Da das erste Synchronisationstelegramm 401 unmittelbar durch die Netzwerkteilnehmer 100 des ersten Segments 10 verarbeitet werden soll, wird das erste Synchronisationstelegramm 401 mit dem zweiten Typ ausgesendet.

Ein Referenzzeitgeber 600 des Netzwerks 1 setzt die Systemzeit des Netzwerks 1 als ersten Synchronisationswert 411 in das erste Synchronisationstelegramm 401 ein.

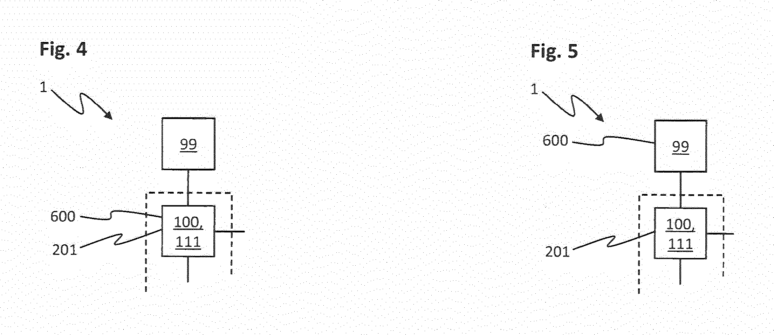

Als Referenzzeitgeber 600 kann beispielsweise der erste Netzwerkteilnehmer 100, 111 des ersten Segments 10 fungieren. Dies ist schematisch in Figur 4 dargestellt, die einen Ausschnitt des Netzwerks 1 gemäß einer Variante zeigt. In diesem Fall wird das erste Synchronisationstelegramm 401 durch den Master-Netzwerkteilnehmer 99 an die Netzwerkteilnehmer 100 des ersten Segments 10 ausgesendet. Der als Referenzzeitgeber 600 fungierende erste Netzwerkteilnehmer 100, 111 des ersten Segments 10 setzt seine lokale Systemzeit 340 als ersten Synchronisationswert 411 in das erste Synchronisationstelegramm 401 ein und leitet das erste Synchronisationstelegramm 401 anschließend an die übrigen Netzwerkteilnehmer 100 des ersten Segments 10 weiter.

Alternativ kann der Master-Netzwerkteilnehmer 99 des Netzwerks 1 als Referenzzeitgeber 600 fungieren. Dies ist schematisch in Figur 5 dargestellt, die einen Ausschnitt des Netzwerks 1 gemäß einer anderen Variante zeigt. In diesem Fall setzt der Master-Netzwerkteilnehmer 99 selbst die Systemzeit des Netzwerks 1 als ersten Synchronisationswert 411 in das erste Synchronisationstelegramm 401 ein und sendet das erste Synchronisationstelegramm 401 dann an die Netzwerkteilnehmer 100 des ersten Segments 10 aus.

Die Netzwerkteilnehmer 100 des ersten Segments 10 erhalten jeweils das erste Synchronisationstelegramm 401, lesen den ersten Synchronisationswert 411 aus dem ersten Synchronisationstelegramm 401 aus und passen den Gang ihrer lokalen Systemzeit 340 jeweils unter Verwendung des ersten Synchronisationswerts 411 an. Dabei berücksichtigen sie jeweils die in dem jeweiligen Netzwerkteilnehmer 100 hinterlegte Verzögerungszeit 330, die angibt, wie lange das erste Synchronisationstelegramm 401 auf seinem Weg von dem Referenzzeitgeber 600 zu dem jeweiligen Netzwerkteilnehmer 100 benötigt hat.

Für die Zeitsynchronisation der Netzwerkteilnehmer 100 des zweiten Segments 20 wird eine Zeitinformation des ersten Netzwerkverteilers 201 verwendet, der das zweite Segment 20 mit dem ersten Segment 10 verbindet.

Der Master-Netzwerkteilnehmer 99 sendet das an das zweite Segment 20 adressierte zweite Synchronisationstelegramm 402 aus. Dabei wird das zweite Synchronisationstelegramm 402 mit dem ersten Typ ausgesendet.

Der erste Netzwerkverteiler 201 empfängt das zweite Synchronisationstelegramm 402 und fügt eine Zeitinformation als zweiten Synchronisationswert 412 in das zweite Synchronisationstelegramm 402 ein. Die Zeitinformation kann, wie oben beschrieben, die lokale Systemzeit 340 des ersten Netzwerkverteilers 201 oder die alternative lokale Systemzeit 350 des ersten Netzwerkverteilers 201 sein. Der erste Netzwerkverteiler 201 wandelt das zweite Synchronisationstelegramm 402 außerdem in den zweiten Typ um. Dies kann, wie oben beschrieben, dadurch erfolgen, dass der Wert des zweiten Typfelds 422 des zweiten Synchronisationstelegramms 402 von einem ersten Wert auf einen zweiten Wert geändert wird. Anschließend leitet der erste Netzwerkverteiler 201 das zweite Synchronisationstelegramm 402 an die Netzwerkteilnehmer 100 des zweiten Segments 20 weiter, indem er das zweite Synchronisationstelegramm 402 an den ersten Netzwerkteilnehmer 100, 121 des zweiten Segments 20 weiterleitet.

Die Netzwerkteilnehmer 100 des zweiten Segments 20 empfangen das zweite Synchronisationstelegramm 402 jeweils, lesen den in dem zweiten Synchronisationstelegramm 402 hinterlegten zweiten Synchronisationswert 412 aus und passen jeweils den Gang ihrer lokalen Systemzeit 340 unter Verwendung des zweiten Synchronisationswerts 412 an. Dabei berücksichtigen die Netzwerkteilnehmer 100 des zweiten Segments 20 auch jeweils die in den jeweiligen Netzwerkteilnehmern 100 hinterlegte Verzögerungszeit 330, die angibt, wie lange das zweite Synchronisationstelegramm 402 auf dem Weg von dem ersten Netzwerkverteiler 201 zu dem jeweiligen Netzwerkteilnehmer 100 des zweiten Segments 20 benötigt.

Für die Zeitsynchronisation der Netzwerkteilnehmer 100 des dritten Segments 30 wird eine Zeitinformation des dritten Netzwerkverteilers 203 verwendet, der das dritte Segment 30 mit dem zweiten Segment 20 verbindet.

Der Master-Netzwerkteilnehmer 99 sendet hierfür das dritte Synchronisationstelegramm 403 aus. Dabei ist das dritte Synchronisationstelegramm 403 an das dritte Segment 30 adressiert. Das von dem Master-Netzwerkteilnehmer 99 ausgesandte dritte Synchronisationstelegramm 403 weist den ersten Typ auf.

In einem nachfolgenden Verfahrensschritt wird das dritte Synchronisationstelegramm 403 durch den dritten Netzwerkverteiler 203 empfangen. Der dritte Netzwerkverteiler 203 setzt eine Zeitinformation des dritten Netzwerkverteilers 203 als dritten Synchronisationswert 413 in das dritte Synchronisationstelegramm 403 ein. Die Zeitinformation des dritten Netzwerkverteilers 203 kann wiederum die lokale Systemzeit 340 des dritten Netzwerkverteilers 203 oder die alternative lokale Systemzeit 350 des dritten Netzwerkverteilers 203 sein.

Zusätzlich wandelt der dritte Netzwerkverteiler 203 das dritte Synchronisationstelegramm 403 in den zweiten Typ um.

Anschließend leitet der dritte Netzwerkverteiler 203 das dritte Synchronisationstelegramm 403 an die Netzwerkteilnehmer 100 des dritten Segments 30 weiter, indem der dritte Netzwerkverteiler 203 das dritte Synchronisationstelegramm 403 über seinen dritten Anschluss 233 an den ersten Netzwerkteilnehmer 100, 131 des dritten Segments 30 weiterleitet.

Die Netzwerkteilnehmer 100 des dritten Segments 30 empfangen das dritte Synchronisationstelegramm 403 jeweils, lesen den in dem dritten Synchronisationstelegramm 403 hinterlegten dritten Synchronisationswert 413 aus und passen jeweils den Gang ihrer lokalen Systemzeit 340 unter Verwendung des dritten Synchronisationswerts 413 an. Dabei berücksichtigen die Netzwerkteilnehmer 100 des dritten Segments 30 auch die in den jeweiligen Netzwerkteilnehmern 100 hinterlegte Verzögerungszeit 330, die angibt, wie lange das dritte Synchronisationstelegramm 403 auf seinem Weg von dem dritten Netzwerkverteiler 203 zu dem jeweiligen Netzwerkteilnehmer 100 des dritten Segments 30 benötigt.

Zur Zeitsynchronisation der Netzwerkteilnehmer 100 des vierten Segments 40 des Netzwerks 1 wird eine Zeitinformation des zweiten Netzwerkverteilers 202 verwendet, der das vierte Segment 40 mit dem ersten Segment 10 verbindet.

Der Master-Netzwerkteilnehmer 99 sendet hierfür das vierte Synchronisationstelegramm 404 aus. Das vierte Synchronisationstelegramm 404 wird mit dem ersten Typ ausgesendet und ist an das vierte Segment 40 adressiert.

Der zweite Netzwerkverteiler 202 empfängt das vierte Synchronisationstelegramm 404 und wandelt das vierte Synchronisationstelegramm 404 in den zweiten Typ um. Außerdem fügt der zweite Netzwerkverteiler 202 eine Zeitinformation des zweiten Netzwerkverteilers 202 als vierten Synchronisationswert 414 in das vierte Synchronisationstelegramm 404 ein. Bei der Zeitinformation des zweiten Netzwerkverteilers 202 kann es sich wiederum um die lokale Systemzeit 340 des zweiten Netzwerkverteilers 202 oder um die alternative lokale Systemzeit 350 des zweiten Netzwerkverteilers 202 handeln. Anschließend leitet der zweite Netzwerkverteiler 202 das vierte Synchronisationstelegramm 404 an die Netzwerkteilnehmer 100 des vierten Segments 40 weiter, indem der zweite Netzwerkverteiler 202 das vierte Synchronisationstelegramm 404 über seinen dritten Anschluss 232 an den ersten Netzwerkteilnehmer 100, 141 des vierten Segments 40 übergibt.

Die Netzwerkteilnehmer 100 des vierten Segments 40 empfangen jeweils das vierte Synchronisationstelegramm 404, lesen den in dem vierten Synchronisationstelegramm 404 hinterlegten vierten Synchronisationswert 414 aus und passen den Gang ihrer lokalen Systemzeit 340 jeweils unter Verwendung des vierten Synchronisationswerts 414 an. Dabei berücksichtigen die Netzwerkteilnehmer 100 des vierten Segments 40 jeweils auch die in den Netzwerkteilnehmern 100 hinterlegte Verzögerungszeit 330, die angibt, wie lange das vierte Synchronisationstelegramm 404 von dem zweiten Netzwerkverteiler 202 zu dem jeweiligen Netzwerkteilnehmer 100 des vierten Segments 40 benötigt.

Zur Zeitsynchronisation der Netzwerkteilnehmer 100 des fünften Segments 50 wird eine Zeitinformation des vierten Netzwerkverteilers 204 verwendet, der das fünfte Segment 50 mit dem vierten Segment 40 verbindet.

Der Master-Netzwerkteilnehmer 99 sendet hierzu das fünfte Synchronisationstelegramm 405 aus. Dabei weist das fünfte Synchronisationstelegramm 405 den ersten Typ auf und ist an das fünfte Segment 50 adressiert.

Der vierte Netzwerkverteiler 204 empfängt das fünfte Synchronisationstelegramm 405 und wandelt das fünfte Synchronisationstelegramm 405 in den zweiten Typ um. Außerdem fügt der vierte Netzwerkverteiler 204 eine Zeitinformation des vierten Netzwerkverteilers 204 als fünften Synchronisationswert 415 in das fünfte Synchronisationstelegramm 405 ein. Die Zeitinformation des vierten Netzwerkverteilers 204 kann die lokale Systemzeit 340 des vierten Netzwerkverteilers 204 oder die alternative lokale Systemzeit 350 des vierten Netzwerkverteilers 204 sein. Anschließend leitet der vierte Netzwerkverteiler 204 das fünfte Synchronisationstelegramm 405 an das fünfte Segment 50 weiter, indem der vierte Netzwerkverteiler 204 das fünfte Synchronisationstelegramm 405 über seinen dritten Anschluss 234 an den ersten Netzwerkteilnehmer 100, 151 des fünften Segments 50 übergibt.

Die Netzwerkteilnehmer 100 des fünften Segments 50 empfangen jeweils das fünfte Synchronisationstelegramm 405, lesen den in dem fünften Synchronisationstelegramm 405 enthaltenen fünften Synchronisationswert 415 aus und passen den Gang ihrer lokalen Systemzeit 340 unter Verwendung des fünften Synchronisationswerts 415 an. Dabei berücksichtigen die Netzwerkteilnehmer 100 des fünften Segments 50 jeweils auch die in den jeweiligen Netzwerkteilnehmern 100 hinterlegte Verzögerungszeit 330, die angibt, wie lang das fünfte Synchronisationstelegramm 405 auf seinem Weg von dem vierten Netzwerkverteiler 204 zu dem jeweiligen Netzwerkteilnehmer 100 des fünften Segments 50 benötigt.

Zur Zeitsynchronisation der Netzwerkteilnehmer 100 des sechsten Segments 60 wird ebenfalls eine Zeitinformation des vierten Netzwerkverteilers 204 verwendet, da der vierte Netzwerkverteiler 204 auch das sechste Segment 60 mit dem vierten Segment 40 verbindet.

Der Master-Netzwerkteilnehmer 99 sendet hierzu das sechste Synchronisationstelegramm 406 aus. Dabei weist das sechste Synchronisationstelegramm 406 den ersten Typ auf und ist an das sechste Segment 60 adressiert.

Der vierte Netzwerkverteiler 204 empfängt das sechste Synchronisationstelegramm 406, wandelt dieses in den zweiten Typ um und setzt eine Zeitinformation des vierten Netzwerkverteilers 204 als sechsten Synchronisationswert 416 in das sechste Synchronisationstelegramm 406 ein. Bei der Zeitinformation des vierten Netzwerkverteilers 204 kann es sich wiederum um die lokale Systemzeit 340 des vierten Netzwerkverteilers 204 oder um die alternative lokale Systemzeit 350 des vierten Netzwerkverteilers 204 handeln. Anschließend leitet der vierte Netzwerkverteiler 204 das sechste Synchronisationstelegramm 406 an das sechste Segment 60 weiter, indem er das sechste Synchronisationstelegramm 406 über seinen vierten Anschluss 244 an den ersten Netzwerkteilnehmer 100, 161 des sechsten Segments 60 übergibt.

Die Netzwerkteilnehmer 100 des sechsten Segments 60 empfangen jeweils das sechste Synchronisationstelegramm 406, lesen den in dem sechsten Synchronisationstelegramm 406 hinterlegten sechsten Synchronisationswert 416 aus und passen jeweils den Gang ihrer lokalen Systemzeit 340 unter Verwendung des sechsten Synchronisationswerts 416 an. Dabei berücksichtigen die Netzwerkteilnehmer 100 des sechsten Segments 60 außerdem die in den jeweiligen Netzwerkteilnehmern 100 hinterlegte Verzögerungszeit 330, die jeweils angibt, wie lange das sechste Synchronisationstelegramm 406 auf seinem Weg von dem vierten Netzwerkverteiler 204 zu dem jeweiligen Netzwerkteilnehmer 100 des sechsten Segments 60 benötigt.

Nachfolgend wird eine zweite Variante des Verfahrens zur Zeitsynchronisation in dem Netzwerk 1 beschrieben. Diese zweite Variante des Verfahrens zur Zeitsynchronisation weist Übereinstimmungen mit der vorstehend beschriebenen ersten Variante des Verfahrens zur Zeitsynchronisation auf. Die Beschreibung der zweiten Variante des Verfahrens zur Zeitsynchronisation nimmt daher Bezug auf dieselben Figuren und verwendet dieselben Bezugszeichen wie die obenstehende Beschreibung. Nachfolgend wird im Wesentlichen beschrieben, wodurch sich die zweite Variante des Verfahrens zur Zeitsynchronisation von der obenstehend beschriebenen ersten Variante des Verfahrens zu Zeitsynchronisation unterscheidet.

Die Netzwerkteilnehmer 100 des ersten Segments 10 des Netzwerks 1 werden bei der zweiten Variante des Verfahrens auf dieselbe Weise synchronisiert wie bei der vorstehend beschriebenen ersten Variante des Verfahrens. Dabei kann wiederum der erste Netzwerkteilnehmer 100, 111 des ersten Segments 10 als Referenzzeitgeber 600 dienen, wie es in Figur 4 dargestellt ist. Alternativ kann der Master-Netzwerkteilnehmer 99 des Netzwerks 1 als Referenzzeitgeber 600 dienen, wie es in Figur 5 gezeigt ist. Zur Zeitsynchronisation der Netzwerkteilnehmer 100 des ersten Segments 10 setzt der Referenzzeitgeber 600 eine Referenzzeit als ersten Synchronisationswert 411 in das durch den Master-Netzwerkteilnehmer 99 ausgesendete erste Synchronisationstelegramm 401 ein. Falls der Master-Netzwerkteilnehmer 99 selbst als Referenzzeitgeber 600 fungiert, so fügt der Master-Netzwerkteilnehmer 99 selbst die Referenzzeit als den ersten Synchronisationswert 411 in das erste Synchronisationstelegramm 401 ein, bevor er das erste Synchronisationstelegramm 401 aussendet. Falls der erste Netzwerkteilnehmer 100, 111 des ersten Segments 10 als der Referenzzeitgeber 600 fungiert, wird die lokale Systemzeit 340 des ersten Netzwerkteilnehmers 100, 111 des ersten Segments 10 als Referenzzeit verwendet. In diesem Fall empfängt der erste Netzwerkteilnehmer 100, 111 des ersten Segments 10 das von dem Master-Netzwerkteilnehmer 99 ausgesendete erste Synchronisationstelegramm 401, fügt seine lokale Systemzeit 340 als ersten Synchronisationswert 411 in das erste Synchronisationstelegramm 401 ein und leitet das erste Synchronisationstelegramm 401 anschließend an die weiteren Netzwerkteilnehmer 100 des ersten Segments 10 weiter.

Die zweite Variante des Verfahrens zur Zeitsynchronisation der Netzwerkteilnehmer 100 unterscheidet sich von der vorstehend beschriebenen ersten Variante des Verfahrens zur Zeitsynchronisation der Netzwerkteilnehmer 100 dadurch, dass bei der zweiten Variante des Verfahrens die von dem Referenzzeitgeber 600 bereitgestellte Referenzzeit auch die Basis für die zur Zeitsynchronisation der Netzwerkteilnehmer 100 der nachgeordneten Segmente 20, 30, 40, 50, 60 verwendeten Synchronisationswerte 412, 413, 414, 415, 416 bildet. Zusätzlich werden dabei Durchlaufzeiten berücksichtigt, die sich bei der Weiterleitung der Synchronisationstelegramme 402, 403, 404, 405, 406 an die nachgeordneten Segmente 20, 30, 40, 50, 60 durch die Netzwerkverteiler 201, 202, 203, 204 ergeben können. Diese Durchlaufzeiten werden zu den in den Synchronisationstelegrammen 402, 403, 404, 405, 406 hinterlegten Synchronisationswerten 412, 413, 414, 415, 416 hinzuaddiert.

Zur Zeitsynchronisation der Netzwerkteilnehmer 100 des zweiten Segments 20 sendet der Master-Netzwerkteilnehmer 99 das zweite Synchronisationstelegramm 402 aus. Das zweite Synchronisationstelegramm 402 wird mit einem ersten Typ ausgesendet. Der Referenzzeitgeber 600 des Netzwerks 1 fügt die Referenzzeit als zweiten Synchronisationswert 412 in das zweite Synchronisationstelegramm 402 ein. Falls der Master-Netzwerkteilnehmer 99 als der Referenzzeitgeber 600 fungiert, fügt der Master-Netzwerkteilnehmer 99 die Referenzzeit bereits vor dem Aussenden des zweiten Synchronisationstelegramms 402 als den zweiten Synchronisationswert 412 in das zweite Synchronisationstelegramm 402 ein. Falls der erste Netzwerkteilnehmer 100, 111 des ersten Segments 10 als der Referenzzeitgeber 600 des Netzwerks 1 fungiert, empfängt der erste Netzwerkteilnehmer 100, 111 des ersten Segments 10 das von dem Master-Netzwerkteilnehmer 99 ausgesendete zweite Synchronisationstelegramm 402 und fügt die als Referenzzeit dienende lokale Systemzeit 340 des ersten Netzwerkteilnehmers 100, 111 des ersten Segments 10 als zweiten Synchronisationswert 412 in das zweite Synchronisationstelegramm 402 ein.

Der erste Netzwerkverteiler 201, der das zweite Segment 20 mit dem ersten Segment 10 verbindet, wandelt das zweite Synchronisationstelegramm 402 anschließend in den zweiten Typ um.

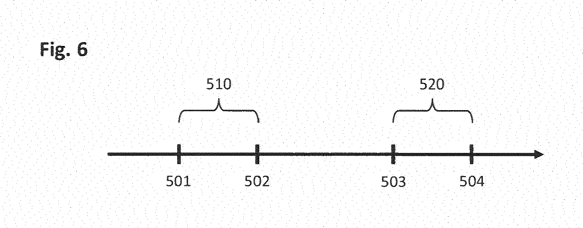

Außerdem erhöht der erste Netzwerkverteiler 201 den in dem zweiten Synchronisationstelegramm 402 hinterlegten zweiten Synchronisationswert 412 gegebenenfalls um eine für das Weiterleiten des zweiten Synchronisationstelegramms 402 an die Netzwerkteilnehmer 100 des zweiten Segments 20 erforderliche erste Durchlaufzeit 510. Diese erste Durchlaufzeit 510 ist schematisch in Figur 6 illustriert. Der erste Netzwerkverteiler 201 empfängt das zweite Synchronisationstelegramm 402 zu einem ersten Zeitpunkt 501 über seinen ersten Anschluss 211. Zur Weiterleitung des zweiten Synchronisationstelegramms 402 an den Netzwerkteilnehmer 100 des zweiten Segments 20 muss der erste Netzwerkverteiler 201 das zweite Synchronisationstelegramm 402 über seinen dritten Anschluss 231 ausgeben. Es kann allerdings vorkommen, dass der dritte Anschluss 231 des ersten Netzwerkverteilers 201 zunächst noch belegt ist und das zweite Synchronisationstelegramm 402 daher erst nach Ablauf der ersten Durchlaufzeit 510 zu einem zweiten Zeitpunkt 502 über den dritten Anschluss 231 des ersten Netzwerkverteilers 201 weitergeleitet werden kann. Diese erste Durchlaufzeit 510 ist variabel und tritt nicht bei jeder Weiterleitung eines Synchronisationstelegramms durch den ersten Netzwerkverteiler 201 an das zweite Segment 20 auf. Der erste Netzwerkverteiler 201 bestimmt bei der Weiterleitung des zweiten Synchronisationstelegramms 402 daher die tatsächlich benötigte erste Durchlaufzeit 510 und addiert diese zu dem in dem zweiten Synchronisationstelegramm 402 hinterlegten zweiten Synchronisationswert 412 hinzu.

In dem Sonderfall, dass der erste Netzwerkverteiler 201 als erster Netzwerkteilnehmer 100, 111 des ersten Segments 10 auch als Referenzzeitgeber 600 fungiert, kann der erste Netzwerkverteiler 201 die Referenzzeit wahlweise auch erst nach Ablauf der ersten Durchlaufzeit 510 als den zweiten Synchronisationswert 412 in das zweite Synchronisationstelegramm 402 einfügen. In diesem Fall ist es nicht erforderlich, die erste Durchlaufzeit 510 anschließend noch zu dem zweiten Synchronisationswert 412 hinzuzuaddieren.

Nachdem der erste Netzwerkverteiler 201 das zweite Synchronisationstelegramm 402 an die Netzwerkteilnehmer 100 des zweiten Segments 20 weitergeleitet hat, wird das zweite Synchronisationstelegramm 402 nacheinander durch jeden der Netzwerkteilnehmer 100 des zweiten Segments 20 empfangen. Die Netzwerkteilnehmer 100 des zweiten Segments 20 lesen jeweils den in dem zweiten Synchronisationstelegramm 402 hinterlegten zweiten Synchronisationswert 412 aus und passen den Gang ihrer lokalen Systemzeit 340 unter Verwendung des zweiten Synchronisationswerts 412 an. Dabei berücksichtigen die Netzwerkteilnehmer 100 des zweiten Segments 20 jeweils auch die in den jeweiligen Netzwerkteilnehmern 100 hinterlegte Verzögerungszeit 330, die angibt, wie lange das zweite Synchronisationstelegramm 402 unabhängig von der ersten Durchlaufzeit 510 von dem Referenzzeitgeber 600 zu dem jeweiligen Netzwerkteilnehmer 100 benötigt.

Zur Zeitsynchronisation der Netzwerkteilnehmer 100 des dritten Segments 30 sendet der Master-Netzwerkteilnehmer 99 das dritte Synchronisationstelegramm 403 aus, wobei das dritte Synchronisationstelegramm 403 den ersten Typ aufweist. Dabei ist das dritte Synchronisationstelegramm 403 an das dritte Segment 30 adressiert.

Der Referenzzeitgeber 600 des Netzwerks 1 setzt auf die vorstehend beschriebene Weise die Referenzzeit als den dritten Synchronisationswert 413 in das dritte Synchronisationstelegramm 403 ein. Der erste Netzwerkverteiler 201 leitet das dritte Synchronisationstelegramm 403 an das zweite Segment 20 weiter, wobei der erste Netzwerkverteiler 201 den in dem dritten Synchronisationstelegramm 403 hinterlegten dritten Synchronisationswert 413 gegebenenfalls um die zur Weiterleitung des dritten Synchronisationstelegramms 403 benötigte erste Durchlaufzeit 510 erhöht. In dem oben bereits erwähnten Sonderfall, dass der erste Netzwerkverteiler 201 als erster Netzwerkteilnehmer 100, 111 des ersten Segments 10 auch als Referenzzeitgeber 600 fungiert, kann der erste Netzwerkverteiler 201 die Referenzzeit wahlweise auch erst nach Ablauf der ersten Durchlaufzeit 510 als den dritten Synchronisationswert 413 in das dritte Synchronisationstelegramm 403 einfügen. In diesem Fall ist es nicht erforderlich, die erste Durchlaufzeit 510 anschließend noch zu dem dritten Synchronisationswert 413 hinzuzuaddieren

Anschließend wird das dritte Synchronisationstelegramm 403 durch den in dem zweiten Segment 20 angeordneten dritten Netzwerkverteiler 203 empfangen, der das dritte Segment 30 mit dem zweiten Segment 20 verbindet. Der dritte Netzwerkverteiler 203 wandelt das dritte Synchronisationstelegramm 403 in den zweiten Typ um.

Dann leitet der dritte Netzwerkverteiler 203 das dritte Synchronisationstelegramm 403 über seinen dritten Anschluss 233 an das dritte Segment 30 weiter. Hierbei kann in dem dritten Netzwerkverteiler 203 eine in Figur 6 illustrierte zweite Durchlaufzeit 520 auftreten, die der dritte Netzwerkverteiler 203 vor dem Weiterleiten des dritten Synchronisationstelegramms 403 zu dem in dem dritten Synchronisationstelegramm 403 hinterlegten dritten Synchronisationswert 413 addiert. Wie in Figur 6 schematisch illustriert, empfängt der dritte Netzwerkverteiler 203 das dritte Synchronisationstelegramm 403 zu einem dritten Zeitpunkt 503 über seinen ersten Anschluss 213. Der dritte Anschluss 233 des dritten Netzwerkverteilers 203 kann zunächst noch belegt sein, sodass der dritte Netzwerkverteiler 203 das dritte Synchronisationstelegramm 403 erst nach Ablauf der zweiten Durchlaufzeit 520 zu einem vierten Zeitpunkt 504 an das dritte Segment 30 weiterleiten kann. Diese zweite Durchlaufzeit 520 tritt nicht bei jedem Durchlauf eines Synchronisationstelegramms durch den dritten Netzwerkverteiler 203 auf und ist zudem veränderlich. Daher bestimmt der dritte Netzwerkverteiler 203 bei der Weiterleitung des dritten Synchronisationstelegramms 403 die tatsächlich auftretende Durchlaufzeit und addiert diese zu dem in dem dritten Synchronisationstelegramm 403 hinterlegten Synchronisationswert 413 hinzu.

Nach dem Weiterleiten des dritten Synchronisationstelegramms 403 an das dritte Segment 30 empfängt nacheinander jeder Netzwerkteilnehmer 100 des dritten Segments 30 das dritte Synchronisationstelegramm 403, liest den in dem dritten Synchronisationstelegramm 403 hinterlegten dritten Synchronisationswert 413 aus und passt jeweils den Gang seiner lokalen Systemzeit 340 unter Verwendung des dritten Synchronisationswerts 413 an. Dabei berücksichtigen die Netzwerkteilnehmer 100 des dritten Segments 30 auch die in den jeweiligen Netzwerkteilnehmern 100 hinterlegte Verzögerungszeit 330, die angibt, wie lange das dritte Synchronisationstelegramm 403 unabhängig von der ersten Durchlaufzeit 510 und der zweiten Durchlaufzeit 520 auf seinem Weg von dem Referenzzeitgeber 600 zu dem jeweiligen Netzwerkteilnehmer 100 des dritten Segments 30 benötigt.

Zur Zeitsynchronisation der Netzwerkteilnehmer 100 des vierten Segments 40 sendet der Master-Netzwerkteilnehmer 99 das vierte Synchronisationstelegramm 404 aus. Dabei weist das vierte Synchronisationstelegramm 404 den ersten Typ auf und ist an das vierte Segment 40 adressiert. Der Referenzzeitgeber 600 des Netzwerks 1 fügt auf die bereits beschriebene Weise die Referenzzeit als vierten Synchronisationswert 414 in das vierte Synchronisationstelegramm 404 ein.

Das vierte Synchronisationstelegramm 404 wird anschließend durch den zweiten Netzwerkverteiler 202 empfangen, der das vierte Segment 40 mit dem ersten Segment 10 verbindet. Der zweite Netzwerkverteiler 202 wandelt das vierte Synchronisationstelegramm 404 in den zweiten Typ um.

Anschließend leitet der zweite Netzwerkverteiler 202 das vierte Synchronisationstelegramm 404 über seinen dritten Anschluss 232 weiter. Da der dritte Anschluss 232 aber zunächst noch belegt sein kann, kann es vor dem Weiterleiten des vierten Synchronisationstelegramms 404 an das vierte Segment 40 wiederum zu der anhand der Figur 6 vorstehend beschriebenen, variablen ersten Durchlaufzeit 510 kommen, die der zweite Netzwerkverteiler 202 vor dem Weiterleiten des vierten Synchronisationstelegramms 404 zu dem in dem vierten Synchronisationstelegramm 404 hinterlegten vierten Synchronisationswert 414 addiert.

Nach dem Weiterleiten des vierten Synchronisationstelegramms 404 an das vierte Segment 40 empfängt jeder Netzwerkteilnehmer 100 des vierten Segments 40 das vierte Synchronisationstelegramm 404, liest den in dem vierten Synchronisationstelegramm 404 hinterlegten vierten Synchronisationswert 414 aus und passt jeweils den Gang seiner lokalen Systemzeit 340 unter Verwendung des vierten Synchronisationswerts 414 an. Dabei berücksichtigen die Netzwerkteilnehmer 100 des vierten Segments 40 jeweils auch die in dem jeweiligen Netzwerkteilnehmer 100 hinterlegte Verzögerungszeit 330, die angibt, wie lange das vierte Synchronisationstelegramm 404 zusätzlich zu der ersten Durchlaufzeit 510 von dem Referenzzeitgeber 600 zu dem jeweiligen Netzwerkteilnehmer 100 des vierten Segments 40 benötigt.

Zur Zeitsynchronisation der Netzwerkteilnehmer 100 des fünften Segments 50 sendet der Master-Netzwerkteilnehmer 99 das fünfte Synchronisationstelegramm 405 aus. Das fünfte Synchronisationstelegramm 405 wird mit dem ersten Typ ausgesendet und ist an das fünfte Segment 50 adressiert. Der Referenzzeitgeber 600 fügt auf die bereits beschriebene Weise die Referenzzeit als fünften Synchronisationswert 415 in das fünfte Synchronisationstelegramm 405 ein.

Das fünfte Synchronisationstelegramm 405 wird durch den zweiten Netzwerkverteiler 202 empfangen, der das vierte Segment 40 mit dem ersten Segment 10 verbindet. Der zweite Netzwerkverteiler 202 leitet das fünfte Synchronisationstelegramm 405 über seinen dritten Anschluss 232 an das vierte Segment 40 weiter und erhöht zuvor den in dem fünften Synchronisationstelegramm 405 hinterlegten fünften Synchronisationswert 415 um die zum Weiterleiten des fünften Synchronisationstelegramms 405 benötigte, variable erste Durchlaufzeit 510.

Im vierten Segment 40 wird das fünfte Synchronisationstelegramm 405 durch den vierten Netzwerkverteiler 204 empfangen, der das fünfte Segment 50 mit dem vierten Segment 40 verbindet. Der vierte Netzwerkverteiler 204 wandelt das fünfte Synchronisationstelegramm 405 in den zweiten Typ um.

Anschließend leitet der vierte Netzwerkverteiler 204 das fünfte Synchronisationstelegramm 405 über seinen dritten Anschluss 234 an das fünfte Segment 50 weiter. Da der dritte Anschluss 234 des vierten Netzwerkverteilers 204 zunächst aber noch belegt sein kann, kann hierbei die oben bereits anhand der Figur 6 erläuterte, variable zweite Durchlaufzeit 520 auftreten, die der vierte Netzwerkverteiler 204 vor dem Weiterleiten des fünften Synchronisationstelegramms 405 an das fünfte Segment 50 zu dem in dem fünften Synchronisationstelegramm 405 hinterlegten fünften Synchronisationswert 415 addiert.

Nach dem Weiterleiten des fünften Synchronisationstelegramms 405 in das fünfte Segment 50 empfangen die Netzwerkteilnehmer 100 des fünften Segments 50 jeweils das fünfte Synchronisationstelegramm 405, lesen den in dem fünften Synchronisationstelegramm 405 hinterlegten fünften Synchronisationswert 415 aus und passen jeweils den Gang ihrer lokalen Systemzeit 340 unter Verwendung des fünften Synchronisationswerts 415 an. Dabei berücksichtigen die Netzwerkteilnehmer 100 des fünften Segments 50 jeweils auch die in dem jeweiligen Netzwerkteilnehmer 100 hinterlegte Verzögerungszeit 330, die jeweils angibt, wie lange das fünfte Synchronisationstelegramm 405 unabhängig von der ersten Durchlaufzeit 510 und der zweiten Durchlaufzeit 520 auf seinem Weg von dem Referenzzeitgeber 600 zu dem jeweiligen Netzwerkteilnehmer 100 des fünften Segments 50 benötigt.

Zur Zeitsynchronisation der Netzwerkteilnehmer 100 des sechsten Segments 60 sendet der Master-Netzwerkteilnehmer 99 das sechste Synchronisationstelegramm 406 aus. Das sechste Synchronisationstelegramm 406 wird mit dem ersten Typ ausgesendet und ist an das sechste Segment 60 adressiert. Der Referenzzeitgeber 600 des Netzwerks 1 fügt auf die bereits beschriebene Weise die Referenzzeit als sechsten Synchronisationswert 416 in das sechste Synchronisationstelegramm 406 ein.

Der zweite Netzwerkverteiler 202, der das vierte Segment 40 mit dem ersten Segment 10 verbindet, empfängt das sechste Synchronisationstelegramm 406 und leitet es über seinen dritten Anschluss 232 an das vierte Segment 40 weiter. Die hierfür benötigte, variable erste Durchlaufzeit 510 addiert der zweite Netzwerkverteiler 202 zuvor zu dem in dem sechsten Synchronisationstelegramm 406 hinterlegten sechsten Synchronisationswert 416.

Im vierten Segment 40 empfängt der vierte Netzwerkverteiler 204, der das sechste Segment 60 mit dem vierten Segment 40 verbindet, das sechste Synchronisationstelegramm 406. Der vierte Netzwerkverteiler 204 wandelt das sechste Synchronisationstelegramm 406 in den zweiten Typ um und leitet das sechste Synchronisationstelegramm 406 über seinen vierten Anschluss 244 an das sechste Segment 60 weiter. Zuvor addiert der vierte Netzwerkverteiler 204 die für das Weiterleiten des sechsten Synchronisationstelegramms 406 benötigte, variable zweite Durchlaufzeit 520 zu dem in dem sechsten Synchronisationstelegramm 406 hinterlegten sechsten Synchronisationswert 416.

Anschließend empfangen die Netzwerkteilnehmer 100 des sechsten Segments 60 jeweils das sechste Synchronisationstelegramm 406, lesen den in dem sechsten Synchronisationstelegramm 406 hinterlegten sechsten Synchronisationswert 416 aus und passen jeweils den Gang ihrer lokalen Systemzeit 340 unter Verwendung des sechsten Synchronisationswerts 416 an. Dabei berücksichtigen die Netzwerkteilnehmer 100 des sechsten Segments 60 jeweils auch die in dem jeweiligen Netzwerkteilnehmer 100 hinterlegte Verzögerungszeit 330, die angibt, wie lange das sechste Synchronisationstelegramm 406 zusätzlich zu der ersten Durchlaufzeit 510 und der zweiten Durchlaufzeit 520 auf dem Weg von dem Referenzzeitgeber 600 zu dem jeweiligen Netzwerkteilnehmer 100 des sechsten Segments 60 benötigt.

Die vorstehend beschriebene zweite Variante des Verfahrens zur Zeitsynchronisation in dem Netzwerk 1, bei der die von dem Referenzzeitgeber 600 bereitgestellte Referenzzeit auch die Basis für die zur Zeitsynchronisation der Netzwerkteilnehmer 100 der nachgeordneten Segmente 20, 30, 40, 50, 60 verwendeten Synchronisationswerte 412, 413, 414, 415, 416 bildet, kann auch in einer vereinfachten Form durchgeführt werden, die nachfolgend beschrieben wird.

In dieser vereinfachten Form sendet der Master-Netzwerkteilnehmer 99 das zweite Synchronisationstelegramm 402, das dritte Synchronisationstelegramm 403, das vierte Synchronisationstelegramm 404, das fünfte Synchronisationstelegramm 405 und das sechste Synchronisationstelegramm 406 nicht mit dem ersten Typ aus, sondern mit dem zweiten Typ. Falls der Typ der Synchronisationstelegramme 402, 403, 404, 405, 406 jeweils durch den Wert des jeweiligen Typfelds 422 festgelegt ist, so kann dies bedeuten, dass das zweite Synchronisationstelegramm 402, das dritte Synchronisationstelegramm 403, das vierte Synchronisationstelegramm 404, das fünfte Synchronisationstelegramm 405 und das sechste Synchronisationstelegramm 406 mit dem zweiten Wert im Typfelds 422 durch den Master-Netzwerkteilnehmer 99 ausgesendet werden.

In dieser vereinfachten Form des Verfahrens wird der Typ der Synchronisationstelegramme 402, 403, 404, 405, 406 entsprechend auch nicht durch die Netzwerkverteiler 201, 202, 203, 204 umgewandelt, die die jeweils zu synchronisierenden Segmente 20, 30, 40, 50 anbinden. Der erste Netzwerkverteiler 201, der das zweite Segment 20 mit dem ersten Segment 10 verbindet, wandelt also das zweite Synchronisationstelegramm 402 nicht in den zweiten Typ um. Der dritte Netzwerkverteiler 203 wandelt das dritte Synchronisationstelegramm 403 nicht in den zweiten Typ um. Der zweite Netzwerkverteiler 202 wandelt das vierte Synchronisationstelegramm 404 nicht in den zweiten Typ um. Der vierte Netzwerkverteiler 204 wandelt weder das fünfte Synchronisationstelegramm 405 noch das sechste Synchronisationstelegramm 406 in den zweiten Typ um.

In dieser vereinfachten Form des Verfahrens zur Zeitsynchronisation in dem Netzwerk 1 durchlaufen die Synchronisationstelegramme 402, 403, 404, 405, 406 unter Umständen mehr Netzwerkteilnehmer 100 des Netzwerks 1 als bei der zuvor beschriebenen Variante, bei der der Master-Netzwerkteilnehmer 99 das zweite Synchronisationstelegramm 402, das dritte Synchronisationstelegramm 403, das vierte Synchronisationstelegramm 404, das fünfte Synchronisationstelegramm 405 und das sechste Synchronisationstelegramm 406 mit dem ersten Typ aussendet und der Typ dann durch die Netzwerkverteiler 201, 202, 203, 204 umgewandelt wird. Dies stellt allerdings keinen wesentlichen Nachteil dar.

Die beschriebenen Varianten des Verfahrens zur Zeitsynchronisation der Netzwerkteilnehmer 100 des Netzwerks 1 können jeweils zyklisch wiederholt werden.

Anhand der Figur 2 wurde bereits beschrieben, dass jedem Netzwerkteilnehmer 100 des Netzwerks 1 jeweils eine in dem jeweiligen Netzwerkteilnehmer 100 hinterlegte Verzögerungszeit 330 bekannt ist. Die Verzögerungszeit 330 gibt an, welche Zeit ein Telegramm, beispielsweise ein Synchronisationstelegramm, benötigt, um von dem Referenzzeitgeber 600 des Netzwerks 1 zu dem jeweiligen Netzwerkteilnehmer 100 zu gelangen. Diese Verzögerungszeit 330 wird während einer Initialisierungsphase des Netzwerks 1 für jeden Netzwerkteilnehmer 100 durch den Master-Netzwerkteilnehmer 99 ermittelt und in dem jeweiligen Netzwerkteilnehmer 100 hinterlegt

Dazu sendet der Master-Netzwerkteilnehmer 99 ein Telegramm, in das alle Netzwerkteilnehmer 100 den Empfangszeitpunkt auf dem Hinweg und auf dem Rückweg eintragen. Der Master-Netzwerkteilnehmer 99 liest diese Empfangszeitpunkte aus und kann daraus die Laufzeiten zwischen den Netzwerkteilnehmer 100 ermitteln. Hieraus kann dann für jeden Netzwerkteilnehmer 100 die jeweilige Verzögerungszeit 330 berechnet werden. Da in den Netzwerkverteilern 201, 202, 203, 204 außerdem die beschriebenen Durchlaufzeiten 510, 520 auftreten können, werden auch diese erfasst und bei der Ermittlung der Verzögerungszeiten 330 berücksichtigt.

Das in Figur 1 gezeigte Netzwerk 1 ist lediglich beispielhaft gewählt. Das beschriebene Verfahren zur Zeitsynchronisation der Netzwerkteilnehmer 100 kann auch in einem anders aufgebauten Netzwerk mit einer anderen Anzahl von Segmenten und einer anderen Anordnung der Segmente verwendet werden.

### Bezugszeichenliste

- 1: Netzwerk

- 10: erstes Segment
- 20: zweites Segment
- 30: drittes Segment
- 40: viertes Segment
- 50: fünftes Segment
- 60: sechstes Segment

- 99: Master-Netzwerkteilnehmer
- 100: Netzwerkteilnehmer
- 111: erster Netzwerkteilnehmer des ersten Segments
- 112: zweiter Netzwerkteilnehmer des ersten Segments
- 113: dritter Netzwerkteilnehmer des ersten Segments
- 114: vierter Netzwerkteilnehmer des ersten Segments
- 115: fünfter Netzwerkteilnehmer des ersten Segments
- 121: erster Netzwerkteilnehmer des zweiten Segments
- 122: zweiter Netzwerkteilnehmer des zweiten Segments
- 123: dritter Netzwerkteilnehmer des zweiten Segments
- 124: vierter Netzwerkteilnehmer des zweiten Segments
- 131: erster Netzwerkteilnehmer des dritten Segments
- 132: zweiter Netzwerkteilnehmer des dritten Segments
- 133: dritter Netzwerkteilnehmer des dritten Segments
- 141: erster Netzwerkteilnehmer des vierten Segments
- 142: zweiter Netzwerkteilnehmer des vierten Segments
- 143: dritter Netzwerkteilnehmer des vierten Segments
- 151: erster Netzwerkteilnehmer des fünften Segments
- 152: zweiter Netzwerkteilnehmer des fünften Segments
- 153: dritter Netzwerkteilnehmer des fünften Segments
- 161: erster Netzwerkteilnehmer des sechsten Segments
- 162: zweiter Netzwerkteilnehmer des sechsten Segments
- 163: dritter Netzwerkteilnehmer des sechsten Segments

- 201: erster Netzwerkverteiler
- 211: erster Anschluss
- 221: zweiter Anschluss
- 231: dritter Anschluss
- 202: zweiter Netzwerkverteiler
- 212: erster Anschluss
- 222: zweiter Anschluss
- 232: dritter Anschluss
- 203: dritter Netzwerkverteiler
- 213: erster Anschluss
- 223: zweiter Anschluss
- 233: dritter Anschluss
- 204: vierter Netzwerkverteiler
- 214: erster Anschluss
- 224: zweiter Anschluss
- 234: dritter Anschluss
- 244: vierter Anschluss

- 300: interner Zeitgeber
- 310: lokale Zeit
- 320: Zeitdifferenz
- 330: Verzögerungszeit
- 340: lokale Systemzeit
- 350: alternative lokale Systemzeit

- 401: erstes Synchronisationstelegramm
- 411: erster Synchronisationswert
- 421: erstes Typfeld

- 402: zweites Synchronisationstelegramm
- 412: zweiter Synchronisationswert
- 422: zweites Typfeld

- 403: drittes Synchronisationstelegramm
- 413: dritter Synchronisationswert
- 423: drittes Typfeld

- 404: viertes Synchronisationstelegramm
- 414: vierter Synchronisationswert
- 424: viertes Typfeld

- 405: fünftes Synchronisationstelegramm
- 415: fünfter Synchronisationswert
- 425: fünftes Typfeld

- 406: sechstes Synchronisationstelegramm
- 416: sechster Synchronisationswert
- 426: sechstes Typfeld

- 501: erster Zeitpunkt
- 502: zweiter Zeitpunkt
- 503: dritter Zeitpunkt
- 504: vierter Zeitpunkt
- 510: erste Durchlaufzeit
- 520: zweite Durchlaufzeit

- 600: Referenzzeitgeber

## Patentansprüche

1. Verfahren zur Zeitsynchronisation in einem Ethernet-basierten Netzwerk (1), wobei das Netzwerk (1) einen Master-Netzwerkteilnehmer (99), ein erstes Segment (10) und ein zweites Segment (20) aufweist,
wobei jedes Segment (10, 20) mindestens einen Netzwerkteilnehmer (100) aufweist,
wobei das zweite Segment (20) über einen in dem ersten Segment (10) angeordneten ersten Netzwerkverteiler (201) mit dem ersten Segment (10) verbunden ist, wobei das Verfahren die folgenden Schritte umfasst:
- Aussenden eines an das zweite Segment (20) adressierten Synchronisationstelegramms (402) durch den Master-Netzwerkteilnehmer (99), wobei das Synchronisationstelegramm (402) einen ersten Typ aufweist, wobei die Netzwerkteilnehmer (100) so eingerichtet sind, dass sie Synchronisationstelegramme (401, 402, 403, 404, 405, 406) unbeachtet lassen, wenn diese den ersten Typ aufweisen;
- Empfangen des Synchronisationstelegramms (402) durch den ersten Netzwerkverteiler (201);
- Umwandeln des Synchronisationstelegramms (402) in einen zweiten Typ durch den ersten Netzwerkverteiler (201), wobei die Netzwerkteilnehmer (100) so eingerichtet sind, dass sie Synchronisationstelegramme (401, 402, 403, 404, 405, 406) beachten, wenn diese den zweiten Typ aufweisen;
- Weiterleiten des Synchronisationstelegramms (402) an einen Netzwerkteilnehmer (121) des zweiten Segments (20) durch den ersten Netzwerkverteiler (201);
- Auslesen eines in dem Synchronisationstelegramm (402) hinterlegten Synchronisationswerts (412) durch den Netzwerkteilnehmer (121) des zweiten Segments (20);
- Anpassen eines Gangs einer lokalen Systemzeit (340) des Netzwerkteilnehmers (121) des zweiten Segments (20) unter Verwendung des Synchronisationswerts (412).

2. Verfahren gemäß Anspruch 1,
wobei das Netzwerk (1) ein drittes Segment (30) aufweist,
wobei das dritte Segment (30) über einen in dem zweiten Segment (20) angeordneten zweiten Netzwerkverteiler (203) mit dem zweiten Segment (20) verbunden ist,
wobei das Verfahren die folgenden weiteren Schritte umfasst:
- Aussenden eines an das dritte Segment (30) adressierten weiteren Synchronisationstelegramms (403) durch den Master-Netzwerkteilnehmer (99), wobei das weitere Synchronisationstelegramm (403) den ersten Typ aufweist;
- Empfangen des weiteren Synchronisationstelegramms (403) durch den zweiten Netzwerkverteiler (203);
- Umwandeln des weiteren Synchronisationstelegramms (403) in den zweiten Typ durch den zweiten Netzwerkverteiler (203);
- Weiterleiten des weiteren Synchronisationstelegramms (403) an einen Netzwerkteilnehmer (131) des dritten Segments (30) durch den zweiten Netzwerkverteiler (203);
- Auslesen eines in dem weiteren Synchronisationstelegramm (403) hinterlegten weiteren Synchronisationswerts (413) durch den Netzwerkteilnehmer (131) des dritten Segments (30);
- Anpassen eines Gangs einer lokalen Systemzeit (340) des Netzwerkteilnehmers (131) des dritten Segments (30) unter Verwendung des weiteren Synchronisationswerts (413).

3. Verfahren gemäß einem der Ansprüche 1 und 2,
wobei nach dem Empfangen des Synchronisationstelegramms (402) durch den ersten Netzwerkverteiler (201) der folgende weitere Schritt durchgeführt wird:
- Einfügen einer Zeitinformation (340, 350) des ersten Netzwerkverteilers (201) als Synchronisationswert (412) in das Synchronisationstelegramm (402) durch den ersten Netzwerkverteiler (201).

4. Verfahren gemäß Anspruch 3,
wobei die Zeitinformation (340) des ersten Netzwerkverteilers (201) aus einer lokalen Zeit (310) des ersten Netzwerkverteilers (201) und einer in dem ersten Netzwerkverteiler (201) hinterlegten Zeitdifferenz (320) gebildet wird.

5. Verfahren gemäß Anspruch 3,
wobei die Zeitinformation (350) des ersten Netzwerkverteilers (201) aus einem während eines vorhergehenden Synchronisationsvorgangs erhaltenen Wert (411) der Systemzeit des ersten Segments (10) und einem Zeitfortschritt einer lokalen Zeit (310) des ersten Netzwerkverteilers (201) seit dem Erhalt des Werts (411) der Systemzeit des ersten Segments (10) gebildet wird.

6. Verfahren gemäß Anspruch 2 und optional einem der Ansprüche 3 bis 5,
wobei das Verfahren die folgenden weiteren Schritte umfasst:
- Einfügen einer Zeitinformation (340, 350) des zweiten Netzwerkverteilers (203) als weiteren Synchronisationswert (413) in das weitere Synchronisationstelegramm (403) durch den zweiten Netzwerkverteiler (203).

7. Verfahren gemäß Anspruch 1,
wobei vor dem Empfangen des Synchronisationstelegramms (402) durch den ersten Netzwerkverteiler (201) der folgende weitere Schritt durchgeführt wird:
- Einfügen einer Referenzzeit als Synchronisationswert (412) in das Synchronisationstelegramm (402) durch einen Referenzzeitgeber (600);
wobei nach dem Empfangen des Synchronisationstelegramms (402) durch den ersten Netzwerkverteiler (201) der folgende weitere Schritt durchgeführt wird:
- Erhöhen des in dem Synchronisationstelegramm (402) hinterlegten Synchronisationswerts (412) um eine für das Weiterleiten des Synchronisationstelegramms (402) durch den ersten Netzwerkverteiler (201) erforderliche erste Durchlaufzeit (510) durch den ersten Netzwerkverteiler (201).

8. Verfahren gemäß Anspruch 7,
wobei als Referenzzeitgeber (600) ein Netzwerkteilnehmer (111) des ersten Segments (10) fungiert,
wobei das Einfügen der Referenzzeit in das Synchronisationstelegramm (402) die folgenden Schritte umfasst:
- Empfangen des Synchronisationstelegramms (402) durch den Referenzzeitgeber (600);
- Einfügen einer lokalen Systemzeit (340) des Referenzzeitgebers als die Referenzzeit in das Synchronisationstelegramm (402) durch den Referenzzeitgeber (600);
- Weiterleiten des Synchronisationstelegramms (402) durch den Referenzzeitgeber (600).

9. Verfahren gemäß Anspruch 7,
wobei der Master-Netzwerkteilnehmer (99) als Referenzzeitgeber (600) fungiert,
wobei der Master-Netzwerkteilnehmer (99) die Referenzzeit vor dem Aussenden des Synchronisationstelegramms (402) in das Synchronisationstelegramm (402) einfügt.

10. Verfahren gemäß Anspruch 2 und einem der Ansprüche 7 bis 9,
wobei vor dem Empfangen des weiteren Synchronisationstelegramms (403) durch den zweiten Netzwerkverteiler (203) die folgenden weiteren Schritte durchgeführt werden:
- Einfügen einer Referenzzeit als weiteren Synchronisationswert (413) in das weitere Synchronisationstelegramm (403) durch den Referenzzeitgeber (600);
- Empfangen des weiteren Synchronisationstelegramms (403) durch den ersten Netzwerkverteiler (201);
- Erhöhen des in dem weiteren Synchronisationstelegramm (403) hinterlegten weiteren Synchronisationswerts (413) um die für das Weiterleiten des weiteren Synchronisationstelegramms (403) durch den ersten Netzwerkverteiler (201) erforderliche erste Durchlaufzeit (510) durch den ersten Netzwerkverteiler (201);
- Weiterleiten des weiteren Synchronisationstelegramms (403) durch den ersten Netzwerkverteiler (201);
wobei nach dem Empfangen des weiteren Synchronisationstelegramms (403) durch den zweiten Netzwerkverteiler (203) der folgende weitere Schritt durchgeführt wird:
- Erhöhen des in dem weiteren Synchronisationstelegramm (403) hinterlegten weiteren Synchronisationswerts (413) um eine für das Weiterleiten des weiteren Synchronisationstelegramms (403) durch den zweiten Netzwerkverteiler (203) erforderliche zweite Durchlaufzeit (520) durch den zweiten Netzwerkverteiler (203).

11. Verfahren gemäß einem der vorhergehenden Ansprüche,
wobei das Synchronisationstelegramm (402) ein Typfeld (422) aufweist,
wobei das Umwandeln des Synchronisationstelegramms (402) von dem ersten Typ in den zweiten Typ ein Ersetzen eines ersten Werts des Typfelds (422) durch einen zweiten Wert umfasst.

12. Verfahren gemäß einem der vorhergehenden Ansprüche,
wobei das Netzwerk (1) ein EtherCAT-Netzwerk ist.

## Claims

1. Method for time synchronization in an Ethernet-based network (1),
wherein the network (1) contains a master network subscriber (99), a first segment (10) and a second segment (20),
wherein each segment (10, 20) contains at least one network subscriber (100),
wherein the second segment (20) is connected to the first segment (10) via a first network distributor (201) arranged in the first segment (10),
wherein the method comprises the following steps:
- the master network subscriber (99) sending a synchronization telegram (402) addressed to the second segment (20), wherein the synchronization telegram (402) is of a first type, wherein the network subscribers (100) are configured such that they ignore synchronization telegrams (401, 402, 403, 404, 405, 406) when they are of the first type;
- the first network distributor (201) receiving the synchronization telegram (402),
- the first network distributor (201) converting the synchronization telegram (402) into a second type, wherein the network subscribers (100) are configured such that they take note of synchronization telegrams (401, 402, 403, 404, 405, 406) when they are of the second type;
- the first network distributor (201) forwarding the synchronization telegram (402) to a network subscriber (121) of the second segment (20);
- the network subscriber (121) of the second segment (20) reading a synchronization value (412) stored in the synchronization telegram (402);
- adjusting a phase of a local system time (340) of the network subscriber (121) of the second segment (20) using the synchronization value (412).

2. Method according to Claim 1,
wherein the network (1) contains a third segment (30),
wherein the third segment (30) is connected to the second segment (20) via a second network distributor (203) arranged in the second segment (20),
wherein the method comprises the following further steps:
- the master network subscriber (99) sending a further synchronization telegram (403) addressed to the third segment (30), wherein the further synchronization telegram (403) is of the first type;
- the second network distributor (203) receiving the further synchronization telegram (403);
- the second network distributor (203) converting the further synchronization telegram (403) into the second type;
- the second network distributor (203) forwarding the further synchronization telegram (403) to a network subscriber (131) of third segment (30);
- the network subscriber (131) of the third segment (30) reading a further synchronization value (413) stored in the further synchronization telegram (403);
- adjusting a phase of a local system time (340) of the network subscriber (131) of the third segment (30) using the further synchronization value (413).

3. Method according to either of Claims 1 and 2,
wherein, following the receipt of the synchronization telegram (402) by the first network distributor (201), the following further step is performed:
- the first network distributor (201) inserting time information (340, 350) of the first network distributor (201) into the synchronization telegram (402) as synchronization value (412).

4. Method according to Claim 3,
wherein the time information (340) of the first network distributor (201) is formed from a local time (310) of the first network distributor (201) and a time difference (320) stored in the first network distributor (201).

5. Method according to Claim 3,
wherein the time information (350) of the first network distributor (201) is formed from a value (411) of the system time of the first segment (10) that is obtained during a previous synchronization process and a time advancement of a local time (310) of the first network distributor (201) since the obtaining of the value (411) of the system time of the first segment (10).

6. Method according to Claim 2 and optionally one of Claims 3 to 5,
wherein the method comprises the following further steps:
- the second network distributor (203) inserting time information (340, 350) of the second network distributor (203) into the further synchronization telegram (403) as further synchronization value (413).

7. Method according to Claim 1,
wherein, prior to the receipt of the synchronization telegram (402) by the first network distributor (201), the following further step is performed:
- a reference clock (600) inserting a reference time into the synchronization telegram (402) as synchronization value (412);
wherein, following the receipt of the synchronization telegram (402) by the first network distributor (201), the following further step is performed:
- the first network distributor (201) increasing the synchronization value (412) stored in the synchronization telegram (402) by a first propagation time (510) required by the first network distributor (201) to forward the synchronization telegram (402).

8. Method according to Claim 7,
wherein a network subscriber (111) of the first segment (10) acts as reference clock (600),
wherein inserting the reference time into the synchronization telegram (402) comprises the following steps:
- the reference clock (600) receiving the synchronization telegram (402);
- the reference clock (600) inserting a local system time (340) of the reference clock into the synchronization telegram (402) as the reference time;
- the reference clock (600) forwarding the synchronization telegram (402).

9. Method according to Claim 7,
wherein the master network subscriber (99) acts as reference clock (600),
wherein the master network subscriber (99) inserts the reference time into the synchronization telegram (402) prior to the sending of the synchronization telegram (402) .

10. Method according to Claim 2 and one of Claims 7 to 9,
wherein, prior to the receipt of the further synchronization telegram (403) by the second network distributor (203), the following further steps are performed:
- the reference clock (600) inserting a reference time into the further synchronization telegram (403) as further synchronization value (413);
- the first network distributor (201) receiving the further synchronization telegram (403);
- the first network distributor (201) increasing the further synchronization value (413) stored in the further synchronization telegram (403) by the first propagation time (510) required by the first network distributor (201) to forward the further synchronization telegram (403) ;
- the first network distributor (201) forwarding the further synchronization telegram (403),
wherein, following the receipt of the further synchronization telegram (403) by the second network distributor (203), the following further step is performed:
- the second network distributor (203) increasing the further synchronization value (413) stored in the further synchronization telegram (403) by a second propagation time (520) required by the second network distributor (203) to forward the further synchronization telegram (403) .

11. Method according to one of the preceding claims,
wherein the synchronization telegram (402) has a type field (422),
wherein the conversion of the synchronization telegram (402) from the first type to the second type comprises replacing a first value of the type field (422) with a second value.

12. Method according to one of the preceding claims,
wherein the network (1) is an EtherCAT network.

## Revendications

1. Procédé de synchronisation temporelle dans un réseau (1) basé sur l'Ethernet,
le réseau (1) possédant un périphérique de réseau maître (99), un premier segment (10) et un deuxième segment (20), chaque segment (10, 20) possédant au moins un périphérique de réseau (100),
le deuxième segment (20) étant connecté au premier segment (10) par le biais d'un premier répartiteur de réseau (201) disposé dans le premier segment (10),
le procédé comprenant les étapes suivantes :
- envoi, par le périphérique de réseau maître (99), d'un télégramme de synchronisation (402) adressé au deuxième segment (20), le télégramme de synchronisation (402) possédant un premier type, les périphériques de réseau (100) étant conçus de telle sorte qu'ils ignorent les télégrammes de synchronisation (401, 402, 403, 404, 405, 406) lorsque ceux-ci possèdent le premier type ;
- réception du télégramme de synchronisation (402) par le premier répartiteur de réseau (201) ;
- conversion du télégramme de synchronisation (402) en un deuxième type par le premier répartiteur de réseau (201), les périphériques de réseau (100) étant conçus de telle sorte qu'ils tiennent compte des télégrammes de synchronisation (401, 402, 403, 404, 405, 406) lorsque ceux-ci possèdent le deuxième type ;
- retransmission du télégramme de synchronisation (402) à un périphérique de réseau (121) du deuxième segment (20) par le premier répartiteur de réseau (201) ;
- lecture, par le périphérique de réseau (121) du deuxième segment (20), d'une valeur de synchronisation (412) consignée dans le télégramme de synchronisation (402) ;
- adaptation d'une cadence d'un temps système local (340) du périphérique de réseau (121) du deuxième segment (20) en utilisant la valeur de synchronisation (412).

2. Procédé selon la revendication 1,
le réseau (1) possédant un troisième segment (30),
le troisième segment (30) étant connecté au deuxième segment (20) par le biais d'un deuxième répartiteur de réseau (203) disposé dans le deuxième segment (20),
le procédé comprenant les étapes supplémentaires suivantes :
- envoi, par le périphérique de réseau maître (99), d'un télégramme de synchronisation supplémentaire (403) adressé au troisième segment (30), le télégramme de synchronisation supplémentaire (403) possédant le premier type ;
- réception du télégramme de synchronisation supplémentaire (403) par le deuxième répartiteur de réseau (203) ;
- conversion du télégramme de synchronisation supplémentaire (403) en un deuxième type par le deuxième répartiteur de réseau (203) ;
- retransmission du télégramme de synchronisation supplémentaire (403) à un périphérique de réseau (131) du troisième segment (30) par le deuxième répartiteur de réseau (203) ;
- lecture, par le périphérique de réseau (131) du troisième segment (30), d'une valeur de synchronisation supplémentaire (413) consignée dans le télégramme de synchronisation supplémentaire (403) ;
- adaptation d'une cadence d'un temps système local (340) du périphérique de réseau (131) du troisième segment (30) en utilisant la valeur de synchronisation supplémentaire (413).

3. Procédé selon l'une des revendications 1 et 2, l'étape supplémentaire suivante étant exécutée après la réception du télégramme de synchronisation (402) par le premier répartiteur de réseau (201) :
- insertion d'une information de temps (340, 350) du premier répartiteur de réseau (201) en tant que valeur de synchronisation (412) dans le télégramme de synchronisation (402) par le premier répartiteur de réseau (201).

4. Procédé selon la revendication 3,
l'information de temps (340) du premier répartiteur de réseau (201) étant formée à partir d'un temps local (310) du premier répartiteur de réseau (201) et d'une différence de temps (320) consignée dans le premier répartiteur de réseau (201).

5. Procédé selon la revendication 3,
l'information de temps (350) du premier répartiteur de réseau (201) étant formée à partir d'une valeur (411) du temps système du premier segment (10), obtenue pendant une opération de synchronisation précédente, et d'une avance de temps d'un temps local (310) du premier répartiteur de réseau (201) depuis l'obtention de la valeur (411) du temps système du premier segment (10).

6. Procédé selon la revendication 2 et, en option, selon l'une des revendications 3 à 5,
le procédé comprenant l'étape supplémentaire suivante :
- insertion d'une information de temps (340, 350) du deuxième répartiteur de réseau (203) en tant que valeur de synchronisation supplémentaire (413) dans le télégramme de synchronisation supplémentaire (403) par le deuxième répartiteur de réseau (203).

7. Procédé selon la revendication 1,
l'étape supplémentaire suivante étant exécutée avant la réception du télégramme de synchronisation (402) par le premier répartiteur de réseau (201) :
- insertion d'un temps de référence en tant que valeur de synchronisation (412) dans le télégramme de synchronisation (402) par un générateur d'horloge de référence (600) ;
l'étape supplémentaire suivante étant exécutée après la réception du télégramme de synchronisation (402) par le premier répartiteur de réseau (201) :
- augmentation, par le premier répartiteur de réseau (201), de la valeur de synchronisation (412) consignée dans le télégramme de synchronisation (402) d'un premier temps de cycle (510) nécessaire pour la retransmission du télégramme de synchronisation (402) par le premier répartiteur de réseau (201).

8. Procédé selon la revendication 7,
un périphérique de réseau (111) du premier segment (10) faisant office de générateur d'horloge de référence (600), l'insertion du temps de référence dans le télégramme de synchronisation (402) comprenant les étapes suivantes :
- réception du télégramme de synchronisation (402) par le générateur d'horloge de référence (600) ;
- insertion d'un temps système local (340) du générateur d'horloge de référence en tant que temps de référence dans le télégramme de synchronisation (402) par le générateur d'horloge de référence (600) ;
- retransmission du télégramme de synchronisation (402) par le générateur d'horloge de référence (600).

9. Procédé selon la revendication 7,
le périphérique de réseau maître (99) faisant office de générateur d'horloge de référence (600),
le périphérique de réseau maître (99) insérant le temps de référence dans le télégramme de synchronisation (402) avant l'envoi du télégramme de synchronisation (402).

10. Procédé selon la revendication 2 et l'une des revendications 7 à 9,
les étapes supplémentaires suivantes étant exécutées avant la réception du télégramme de synchronisation supplémentaire (403) par le deuxième répartiteur de réseau (203) :
- insertion d'un temps de référence en tant que valeur de synchronisation supplémentaire (413) dans le télégramme de synchronisation supplémentaire (403) par le générateur d'horloge de référence (600) ;
- réception du télégramme de synchronisation supplémentaire (403) par le premier répartiteur de réseau (201) ;
- augmentation, par le premier répartiteur de réseau (201), de la valeur de synchronisation supplémentaire (413) consignée dans le télégramme de synchronisation supplémentaire (403) du premier temps de cycle (510) nécessaire pour la retransmission du télégramme de synchronisation supplémentaire (403) par le premier répartiteur de réseau (201) ;
- retransmission du télégramme de synchronisation supplémentaire (403) par le premier répartiteur de réseau (201) ;
l'étape supplémentaire suivante étant exécutée après la réception du télégramme de synchronisation supplémentaire (403) par le deuxième répartiteur de réseau (203) :
- augmentation, par le deuxième répartiteur de réseau (203), de la valeur de synchronisation supplémentaire (413) consignée dans le télégramme de synchronisation supplémentaire (403) d'un deuxième temps de cycle (520) nécessaire pour la retransmission du télégramme de synchronisation supplémentaire (403) par le deuxième répartiteur de réseau (203).

11. Procédé selon l'une des revendications précédentes, le télégramme de synchronisation (402) possédant un champ de type (422),
la conversion du télégramme de synchronisation (402) du premier type en le deuxième type comprenant un remplacement d'une première valeur du champ de type (422) par une deuxième valeur.

12. Procédé selon l'une des revendications précédentes, le réseau (1) étant un réseau EtherCAT.
